(19) Europäisches Patentamt
European Patent Office
Office européen des brevets

(11) **EP 3 473 994 B1**

(12) **EUROPEAN PATENT SPECIFICATION**

(45) Date of publication and mention
of the grant of the patent:
**30.09.2020  Bulletin 2020/40**

(51) Int Cl.:
*G01M 5/00* (2006.01)     *B64F 5/60* (2017.01)

(21) Application number: **18200275.8**

(22) Date of filing: **12.10.2018**

(54) **MEASUREMENT SYNCHRONIZATION METHODS FOR DISTRIBUTED MONITORING SYSTEMS**

MESSSYNCHRONISATIONSVERFAHREN FÜR VERTEILTE ÜBERWACHUNGSSYSTEME

PROCÉDÉS DE SYNCHRONISATION DE MESURE POUR DES SYSTÈMES DE SURVEILLANCE DISTRIBUÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.10.2017  US 201715730994**

(43) Date of publication of application:
**24.04.2019  Bulletin 2019/17**

(73) Proprietor: **Honeywell International Inc.
Morris Plains, NJ 07950 (US)**

(72) Inventors:
 • **KALMAR, Robert
   Morris Plains, NJ New Jersey 07950 (US)**
 • **MORAVEK, Patrik
   Morris Plains, NJ New Jersey 07950 (US)**
 • **KUBAT, David
   Morris Plains, NJ New Jersey 07950 (US)**
 • **AXMAN, Petr
   Morris Plains, NJ New Jersey 07950 (US)**

(74) Representative: **Houghton, Mark Phillip
Patent Outsourcing Limited
Corner House
1 King Street
Bakewell
Derbyshire DE45 1DZ (GB)**

(56) References cited:
**WO-A1-2017/019678     US-A1- 2008 036 617**

EP 3 473 994 B1

**EP 3 473 994 B1**

**Description**

TECHNICAL FIELD

The subject matter described herein relates generally to vehicle systems, and more particularly, embodiments of the subject matter relate to monitoring rotorcraft and other avionics systems using a distributed sensing topology.

BACKGROUND

Vehicle and aviation communities continually attempt to achieve improved safety and reduced operating costs. Health and Usage Monitoring Systems (HUMS) monitor the drive train and other vehicle and aircraft component's health using specialized measurements and diagnostics. For example, in the case of a helicopter or other rotorcraft, the rotating blades in a blade assembly as well as other mechanical components in the drive train, may be monitored as they experience bending, twisting, imbalances, misalignments, wear and other vibratory forces during flight, which, in turn, could lead to premature wear detrimental to mechanical integrity.

HUMS equipment may be installed onboard and wired to onboard sensors or systems to obtain measurement data pertaining to various mechanical components, which, in turn, may be processed and analyzed to characterize the condition of those components. For example, vibration measurements may be utilized by a Rotor Track and Balance (RTB) system that tracks vibration of rotors of the rotorcraft and takes corrective action to smooth such vibration. In such equipped rotorcraft, a tachometer and accelerometers may be placed in close proximity to a rotor but remotely from the HUMS. The accelerometers sense vibration due to the rotor and the tachometer detects angular speed and phase of the rotor and generates sensor data based thereon. The sensor data is then sent to the HUMS, typically over one or more wires. Thus, traditional HUMS installations can be heavy, costly, and susceptible to other problems.

Typically, HUMS data is then subsequently transferred, via a physical connection, to another device which may further process the data and generate graphical displays based on the data that can be reviewed by a pilot, crew chief, HUMS manager, or the like. However, this process can be time consuming and require a user have the appropriate hardware (e.g., the necessary cables for connecting to the HUMS box and access to a ruggedized portable computer with the necessary software for processing the HUMS data).

In view of the foregoing, it is desirable to enable HUMS data to be reviewed in a more expeditious and convenient manner to improve the efficiency of operations (or reduce operating costs) without compromising safety and while remaining in full compliance with regulatory or operational guidelines. Additionally, it is desirable to decrease costs, weight, and other drawbacks associated with traditional HUMS installations to increase proliferation of HUMS capabilities, and thereby, improved safety and operational outcomes resulting from increased adoption and retrofitting. Other desirable features and characteristics will become apparent from the subsequent detailed description and the appended claims, taken in conjunction with the accompanying drawings and the foregoing technical field and background.

WO2017019678A1 discloses technologies for time-synchronizing sample data from independent recording devices utilizing samples tagged from a highly accurate time source. Datasets comprising samples representing a signal over a period of time are received from separate recording devices. A number of samples in each dataset are tagged indicating that the sample was taken immediately after a pulse in a PPS signal from a highly accurate time source onboard the recording device. The indices of the PPS-tagged samples, along with corresponding time values, are extracted from the datasets, and a set of common time values between the datasets is determined. A pair of frames of a specific length are extracted from each dataset aligned on the PPS-tagged samples corresponding to the common time values and comparative analysis is performed on the pair of frames.

BRIEF SUMMARY

The present invention in its various aspects is as set out in the appended claims. Vehicle monitoring systems and methods are provided. In one embodiment, method of monitoring health of a vehicle involves a client device broadcasting a plurality of measurement synchronization messages corresponding to a measurement window to a plurality of measurement units onboard the vehicle over a wireless network, obtaining synchronization timestamp data corresponding to the plurality of measurement synchronization messages from each of the plurality of measurement units, obtaining measurement data obtained during the measurement window from each of the plurality of measurement units, associating one or more samples of the measurement data from a first measurement unit of the plurality of measurement units with one or more samples of the measurement data from a second measurement unit of the plurality of measurement units based on the synchronization timestamp data, and characterizing a condition of the vehicle based at least in part on the associated samples of the measurement data.

In another embodiment, a vehicle monitoring system is provided. The monitoring system includes a first measurement module onboard the vehicle to provide first measurement data samples corresponding to a first mechanical component of the vehicle during a measurement window, a second measurement module onboard the vehicle to provide second measurement data samples corresponding to a second mechanical component of the vehicle during the measurement window, and an electronic device communicatively coupled to the first measurement module and the second measurement module over a wireless network. The electronic device is configured to broadcast a plurality of measurement synchronization messages corresponding to the measurement window, receive first synchronization timestamp data corresponding to receipt of the plurality of measurement synchronization messages by the first measurement module, receive second synchronization timestamp data corresponding to receipt of the plurality of measurement synchronization messages by the second measurement module, receive the first measurement data samples from the first measurement module, and receive the second measurement data samples from the second measurement module. The electronic device associates one or more of the first measurement data samples with one or more of the second measurement data samples based at least in part on the first synchronization timestamp data and the second synchronization timestamp data and characterizes a condition of the vehicle based at least in part on the associated measurement data samples.

In another embodiment, a method of monitoring health of a vehicle involves a mobile device broadcasting a first measurement synchronization message to a plurality of sensor management units onboard the vehicle using a wireless network associated with the vehicle and obtaining measurement start timestamp data corresponding to receipt of the first measurement synchronization message from each of the plurality of sensor management units. Each of the sensor management units is associated with a set of one or more sensing arrangements for obtaining measurement data corresponding to a respective mechanical component of a plurality of mechanical components of the vehicle. The mobile device also broadcasts a second measurement synchronization message to the plurality of sensor management units onboard the vehicle using the wireless network and obtains measurement stop timestamp data corresponding to receipt of the second measurement synchronization message from each of the plurality of sensor management units. The mobile device obtains the measurement data corresponding to a measurement window between the first measurement synchronization message and the second measurement synchronization message from each of the plurality of sensor management units, temporally correlates samples of the measurement data from the plurality of sensor management units within a synchronization threshold based on relationships between the measurement stop timestamp data and the measurement start timestamp data, and characterizes conditions of one or more of the plurality of mechanical components based on the synchronized subset of the samples of the measurement data.

Furthermore, other desirable features and characteristics of the method and system will become apparent from the subsequent detailed description and the appended claims, taken in conjunction with the accompanying drawings and the preceding background.

BRIEF DESCRIPTION OF THE DRAWINGS

The present invention will hereinafter be described in conjunction with the following figures, wherein like numerals denote like elements, and wherein:

FIG. 1 is a block diagram illustrating a monitoring system for a rotorcraft in accordance with one or more exemplary embodiments;

FIG. 2 is a block diagram illustrating a mobile device suitable for use in the monitoring system of FIG. 1 in accordance with one or more exemplary embodiments;

FIG. 3 is a block diagram illustrating a sensor management module suitable for use in the monitoring system of FIG. 1 in accordance with one or more exemplary embodiments;

FIG. 4 is a flow diagram illustrating a distributed monitoring process suitable for implementation by the monitoring system of FIG. 1 in accordance with one or more exemplary embodiments;

FIG. 5 is a flow diagram illustrating a measurement data synchronization process suitable for implementation by the monitoring system of FIG. 1 in accordance with one or more exemplary embodiments;

FIG. 6 is a diagram illustrating a sequence of communications within a monitoring system in conjunction with the measurement data synchronization process of FIG. 5 in accordance one or more exemplary embodiments;

FIG. 7 is a timing diagram illustrating data synchronization between two sensor management modules using synchronization messages in conjunction with the measurement data synchronization process of FIG. 5 in accordance one or more exemplary embodiments; and

FIG. 8 is a block diagram of a communications system suitable for use in a wireless sensor management unit configured to support the measurement data synchronization process of FIG. 5 and the communications sequence of FIG. 6 in accordance with one or more embodiments.

DETAILED DESCRIPTION

The following detailed description is merely exemplary in nature and is not intended to limit the subject matter of the application and uses thereof. Furthermore, there is no intention to be bound by any theory presented in the preceding background, brief summary, or the following detailed description.

Embodiments of the subject matter described herein relate to monitoring systems including sensing capabilities distributed throughout a vehicle near various mechanical components of the vehicle to obtain measurement data for monitoring those mechanical components. The measurement data is provided to a mobile device via a vehicle communications network. The mobile device processes or otherwise analyzes the data using one or more health and usage monitoring algorithms to determine and present information pertaining to the relative health or condition of the mechanical components onboard the vehicle. Thus, rather than relying on dedicated Health and Usage Monitoring Systems (HUMS) equipment onboard a vehicle, the HUMS analysis and related features may be implemented at the mobile device, which can reduce the weight and cost that could be otherwise associated with a HUMS installation (e.g., dedicated HUMS equipment and related cabling). The weight reduction is particularly advantageous for small aircraft, namely, small helicopters and other rotorcraft where the weight associated with dedicated HUMS hardware is prohibitive. Additionally, the mobile device is independent from installed avionics, which simplifies certifications (e.g., supplemental type certification (STC) and the like) and expands the range of installation possibilities to differently equipped aircraft.

Moreover, while some HUMS hardware could include a relatively limited number of input/output interfaces or have other limitations due to packaging or mechanical concerns, the computational capabilities of the mobile device may not be so constrained and the distributed monitoring system provided herein is similarly not constrained to any particular number of sensors or measurement channels supportable by the mobile device. The distributed nature of the architecture enables incremental installation of more sensing capabilities without modifications to previously installed hardware.

In exemplary embodiments, the mobile device configures the distributed sensing units to support synchronization of communications and/or measurements. In this regard, in some embodiments, the mobile device may initiate or otherwise trigger measurements dynamically and in real-time based on status information detected or otherwise identified at the mobile device, such as, for example, a current aircraft position, a current aircraft altitude, or the like. Measurements at the distributed sensing units can also be configured to be triggered or otherwise occur autonomously or based on information or data provided avionics or other onboard components. Additionally, a pilot or other user can utilize the mobile device to manually initiate measurements at the sensing units. The mobile device can also be utilized to upload or otherwise backup measurement data and/or related monitoring data to a remote server or other ground station for further distribution, analysis, and the like.

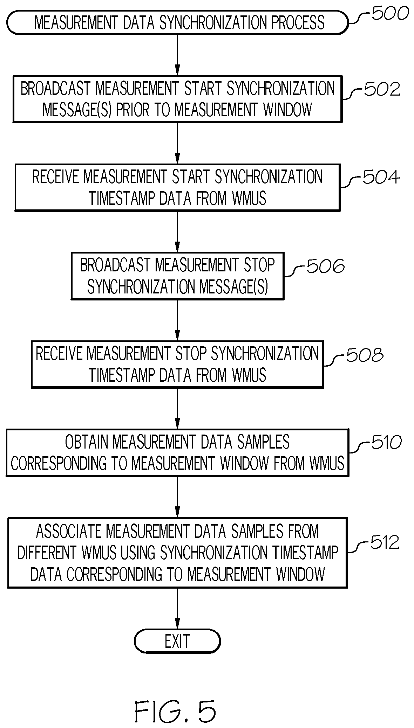

As described in greater detail below primarily in the context of FIGS. 5-7, in exemplary embodiments, samples of measurement data from different distributed sensing units are retrospectively synchronized to a common clock domain using broadcast synchronization messages. In this regard, due to manufacturing process variations, temperature, aging, and potentially other effects, the clock frequencies associated with the different sensing units may vary with respect to one another, even though the sensing units may utilize the same crystal oscillator and be designed to have a common nominal frequency. For vehicle health monitoring (VHM) or other HUMS algorithms that require a relatively high level of data synchronization accuracy (e.g., within one microsecond or less), aligning or correlating measurement data samples from different distributed sensing arrangements in the time domain becomes a concern. Rather than requiring specialized transceivers or other hardware that supports such synchronization (e.g., by limiting nondeterministic sources of synchronization error in communication stack layers), the subject matter described herein allows for commercial off-the-shelf (COTS) transceivers to achieve relatively accurate synchronization using broadcast messages both at or around the start of a measurement sequence and at or around the end of the measurement sequence and utilizing timestamps generated at the respective distributed sensing units to relate measurement data samples obtained between broadcasts from one clock domain to another. It should be noted that the retrospectively synchronized data samples are not necessarily sampled, captured, or obtained synchronously or simultaneously in real-time, but rather, retrospectively identified as having occurred within a synchronization threshold amount of time with respect to one another. Accordingly, "synchronized" and variants thereof should not be construed as necessarily requiring simultaneity.

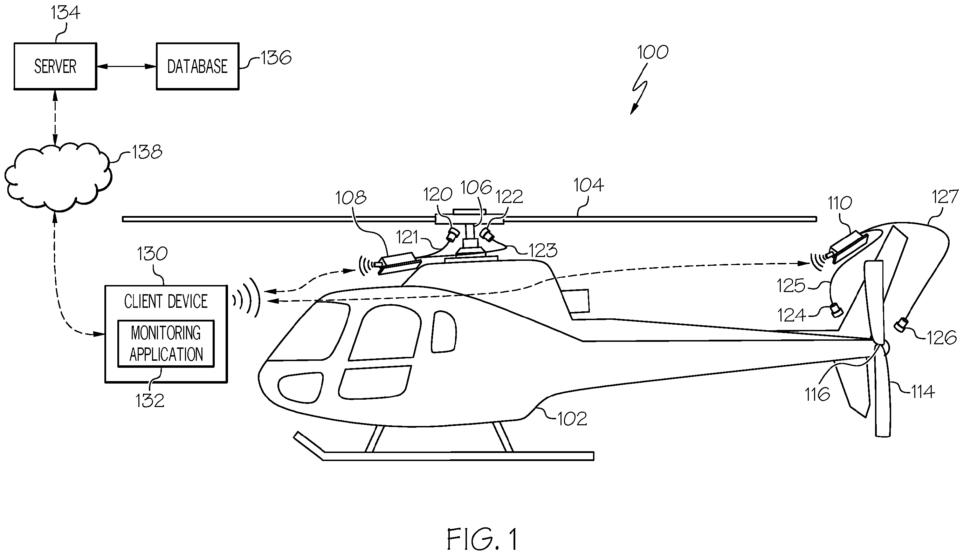

FIG. 1 depicts exemplary embodiments of a monitoring system 100 associated with a vehicle 102 for monitoring the condition or health of one of more mechanical components of the vehicle 102. While the subject matter described herein is not necessarily limited to any particular type of vehicle, for purposes of explanation, the subject matter may be described herein in the context of monitoring the condition of one or more blades, wings or other airfoils or the corresponding drive train components of a helicopter or other rotorcraft. In this regard, the rotorcraft 102 may include at least one rotor assembly having a plurality of blades that revolve around a mast or rotor actuated by a drive train assembly to provide lift or thrust. For example, in the illustrated embodiment, a first set of blades 104 rotate horizontally around a mast 106 located at or near a center of a fuselage of the rotorcraft 102. The blades 104 and mast 106 may be collectively referred to as a main rotor. The main rotor is controlled to provide lift for the rotorcraft 102. A second set of blades 114 rotate almost vertically around a mast 116 located at or near an end of a tail of the rotorcraft 102. The blades 114 and mast 116 may be collectively referred to as a tail rotor. The tail rotor is controlled to provide thrust for the rotorcraft 102.

It should be appreciated that FIG. 1 depicts a simplified representation of the monitoring system 100 for purposes of explanation, and FIG. 1 is not intended to limit the subject matter in any way. In this regard, the subject matter described herein is not intended to be limited to rotorcraft or any particular type of mechanical component, and in practical embodiments, may be implemented in an equivalent manner for other types of mechanical components of other types of aircraft or ground vehicles. As can be appreciated, various types of rotorcrafts include a varying number of rotors arranged at varying locations, and as such, the monitoring system 100 of the present disclosure is not limited to the present example shown in FIG. 1.

The illustrated monitoring system 100 includes a plurality of sensing arrangements (or sensors) 120, 122, 124, 126 that sense, measure, detect, or otherwise quantify one or more characteristics (or conditions) at their respective positions on the rotorcraft 102 during operation of the rotorcraft 102 and generate corresponding measurement data based thereon. In exemplary embodiments, onboard sensors 120, 122, 124, 126 sense, measure, detect, or otherwise quantify a characteristic that correspond to an operational characteristic (or condition) of one or more mechanical components of the rotorcraft 102 that the respective sensor 120, 122, 124, 126 is mounted on or near. Depending on the embodiment, the sensors 120, 122, 124, 126 could include one or more accelerometers, velometers (velocity sensors), proximity probes, tachometers, MEMS vibration sensors, or the like configured to quantify the rate or frequency at which the body, frame, fuselage, seats, or other mechanical component of rotorcraft 102 vibrates or otherwise oscillates during flight. One or more onboard sensors 120, 122, 124, 126 may also be coupled to or otherwise configured to measure operational, mechanical and/or performance characteristics of the engine(s), gearbox(es), transmission(s) or other mechanical components of the drive assembly that are mechanically coupled to the rotor assembly to rotate the rotor 106, 116 or blades 104, 114 during flight. Additionally, one or more sensors 120, 122, 124, 126 may be configured to measure or otherwise quantify the speed of rotation of the respective blades 104, 114 or the rotor 106, 116, the deflection or angle attack of the respective blades 104, 114, the imbalance of rotor 106, 116, the misalignment or excessive wear of shafts, gears and/or bearings, or other characteristics of the drive train assembly during flight. For purposes of explanation, "raw measurement data," "raw operational data," "raw flight data," or variants thereof may be used herein to refer to the unprocessed measurement data obtained via the onboard sensors 120, 122, 124, 126 that corresponds to the characteristic(s) of the mechanical component(s) of the rotor assembly, the drive assembly or other mechanical component(s) of the rotorcraft 102 that were measured during operation of the rotorcraft 102.

In exemplary embodiments, the sensors 120, 122, 124, 126 are distributed about the rotorcraft 102 and positioned on or near the rotary mechanical components of the rotorcraft 102 (e.g., the main and tail rotors) and associated with a corresponding supervisory management module 108, 110. The sensor management modules 108, 110 are capable of supporting multiple different sensors operating on different channels or via different electrical interfaces. In this regard, the management modules 108, 110 receive measurement data from their associated sensors 120, 122, 124, 126 via electrical connections 121, 123, 125, 127 (e.g., wires, cables, or the like) that connect the sensors 120, 122, 124, 126 to respective channel interfaces of the management modules 108, 110. The management modules 108, 110 also include one or more communications interfaces configured to support communications with a client device 130 over a communications network associated with the rotorcraft 102. In exemplary embodiments, the vehicle communications network is realized as a wireless local area network (WLAN), with the management modules 108, 110 including transceivers that communicate data according to a wireless communication protocol. For purposes of explanation, the management modules 108, 110 are alternatively referred to herein as wireless measurement units (WMUs).

The client device 130 generally represents an electronic device communicatively coupled to the wireless network associated with the rotorcraft 102. In exemplary embodiments, the client device 130 is realized as a mobile device that is distinct or separate from the rotorcraft 102. In practice, the client device 130 can be realized as any sort of mobile computing device, mobile telephone, smartphone, laptop, tablet, personal computer or other network-enabled electronic device. In exemplary embodiments, the client device 130 includes a display device capable of graphically presenting data and/or information along with one or more user input devices capable of receiving input from the user of the client device 130. In exemplary embodiments, the client device 130 includes a processing system that includes or is otherwise coupled to a data storage element having programming instructions or code that, when read and executed, cause the processing system to generate or otherwise facilitate a monitoring application 132 on the client device 130. As described in greater detail below, the monitoring application 132 supports wireless communications with the WMUs 108, 110 and performs one or more health and usage monitoring processes or algorithms to characterize the condition of the mechanical components 104, 106, 114, 116 based on measurement data received from the sensors 120, 122, 124, 126 via the WMUs 108, 110.

In one embodiment, the monitoring application 132 performs rotor track and balance (RTB) analysis. For example, the sensors 120, 122 supported by the WMU 108 may include a tachometer that measures speed and acceleration of the rotating blades 104 and one or more accelerometers that measure vibrations caused by the rotating blades 104. Similarly, the sensors 124, 126 supported by the WMU 110 may include a tachometer that measures speed and acceleration of the rotating blades 114 and one or more accelerometers that measure vibrations caused by the rotating blades 114. The monitoring application 132 receives the speed and acceleration measurement data from the respective WMUs 108, 110 and analyzes the measurement data to characterize the track of the blades 104, 114 and any imbalances that may require maintenance. Although not illustrated in FIG. 1, in some embodiments, actuation arrangements including a combination of hardware, firmware and/or other mechanical components may be associated with the rotor assemblies of the rotorcraft 102 and communicatively coupled to the client device 130 via the wireless network associated with the rotorcraft 102. The client device 130 may then transmit or otherwise provide commands, to an actuation arrangement via the wireless network, that allow the client device 130 to modify or otherwise adjust the rotor assemblies (e.g., perform rotor track and balance adjustments) in a manner that is influenced by the measurement data received from the sensors 120, 122, 124, 126 to reduce vibrations of the rotorcraft 102 or otherwise mitigate wear and tear or other undesirable physical effects on the mechanical components of the rotorcraft 102.

Still referring to FIG. 1, in exemplary embodiments, the client device 130 is communicatively coupled to a communications network 138 that is separate and distinct from the wireless network associated with the rotorcraft 102, and furthermore, in some embodiments, the WMUs 108, 110 or other components or systems onboard the rotorcraft 102 may be incapable of communicating over the network 138. In the embodiment of FIG. 1, the network 138 is any communications network (or a combination of communications networks) capable of transmitting data between the client device 130 and a remote computing system, such as, for example, a server 134 or other computer at a ground-based station. In various embodiments, network 138 includes any number of public or private data connections, links or networks supporting any number of communications protocols. Network 138 may include a cellular communications network, the Internet, or any other network.

In one or more embodiments, the code or programming instructions corresponding to the monitoring application 132 are downloaded or retrieved via a network 138 (e.g., from the server 134 or another networked host) and installed at the client device 130. In other embodiments, the code or programming instructions corresponding to the monitoring application 132 may be retrieved on an as-needed basis at run-time (e.g., from the server 134 via network 138). That said, in other embodiments, the monitoring application 132 may be realized as a standalone application installed locally at the client device 130.

Still referring to FIG. 1, the server 134 may be realized as one or more server computers or other device(s) coupled to the network 138. The server 134 may be implemented with a server computer system or data processing system that is based upon any processor, architecture and/or operating system, and will typically be implemented using any sort of processing system, memory and input/output features. Various embodiments may be implemented using dedicated or shared hardware servers; other implementations may make use of virtual server features as part of a "cloud computing" service. In the illustrated embodiment, the server 134 is communicatively coupled to a database 136 for storing or otherwise maintaining measurement data, monitoring data, health and usage data, and the like associated with various instances of rotorcraft 102, which is received by the server 134 from the respective instances of client devices 130 paired with those rotorcraft 102. In this regard, the server 134 may manage flight logs and support more detailed analysis using a more comprehensive data set that includes data from previous flights that may not be available at the client device 130. For example, the server 134 may store data received from the monitoring application 132 on the client device 130 into corresponding flight log data sets in the database 136, and then subsequently retrieve and analyze the historical flight log data sets corresponding to multiple flights or instances of operation of the rotorcraft 102 to discern trends in the operational characteristics or health of the mechanical components of the rotorcraft 102. GUI displays can then be generated (e.g., at the ground-based station or the client device 130) that present the results of the analysis and/or allow a user to perform a detailed review the measurement data encapsulated by the flight log data.

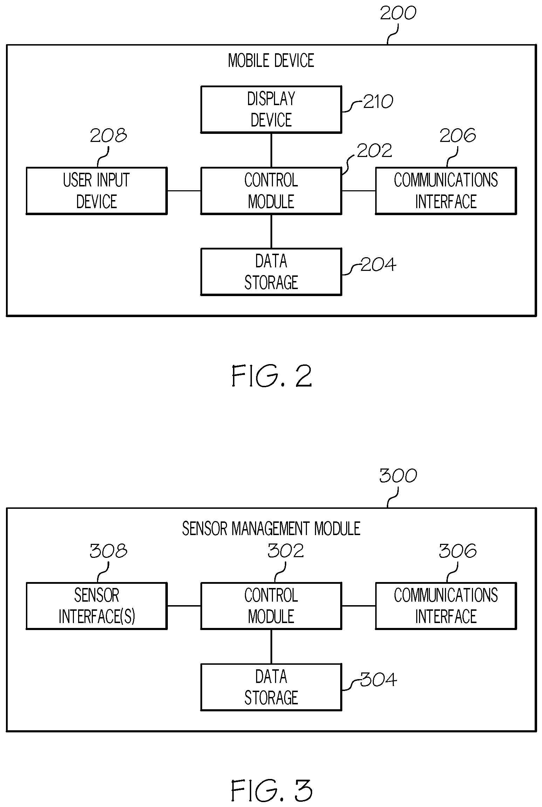

FIG. 2 depicts an exemplary embodiment of a mobile electronic device 200 suitable for use as the client device 130 in the monitoring system 100 of FIG. 1. The illustrated electronic device 200 includes, without limitation, a control module 202, a data storage element or memory 204, a communications interface 206, a user input device 208 and a display device 210. It should be understood that FIG. 2 is a simplified representation of the mobile device 200 for purposes of explanation and ease of description, and FIG. 2 is not intended to limit the subject matter in any way.

The control module 202 generally represents the hardware, circuitry, logic, firmware and/or other components of the mobile device 200 configured to perform the various tasks, operations, functions and/or operations described herein. Depending on the embodiment, the control module 202 may be implemented or realized with a general purpose processor, a microprocessor, a controller, a microcontroller, a state machine, a content addressable memory, an application specific integrated circuit, a field programmable gate array, any suitable programmable logic device, discrete gate or transistor logic, discrete hardware components, or any combination thereof, designed to perform the functions described herein. Furthermore, the steps of a method or algorithm described in connection with the embodiments disclosed herein may be embodied directly in hardware, in firmware, in a software module executed by the control module 202, or in any practical combination thereof. In this regard, the data storage element (or memory) 204 represents any non-transitory short or long term storage media capable of storing programming instructions for execution by the control module 202, which, when read and executed by the control module 202, cause the control module 202 to perform certain tasks, operations, functions, and processes described herein. For example, the data storage element 204 may include code or other computer-executable programming instructions that, when read and executed by the control module 202, cause the control module 202 to implement or otherwise generate the monitoring application 132.

In the illustrated embodiment, the communications interface 206 generally represents the hardware, software, firmware and/or combination thereof that is coupled to the control module 202 and cooperatively configured to support wireless communications to/from the mobile device 200 via a wireless network associated with the rotorcraft 102 in a conventional manner. For example, the communications arrangement may include at least one transceiver module configured to support communications on the vehicle wireless network. The user input device 208 generally represents a touchscreen, a touch panel, a keyboard, a key pad, a mouse, a joystick, a directional pad, a motion sensor, or any other suitable user input device or combinations thereof. The display device 210 generally represents an electronic display (e.g., a liquid crystal display (LCD), a light emitting diode (LED) display, or the like), a monitor, a screen, or the like that is configured to graphically display data and/or information under control of the control module 202.

FIG. 3 depicts an exemplary embodiment of a sensor management module 300 suitable for use as a management module 108, 110 in the monitoring system 100 of FIG. 1. The illustrated sensor management module 300 includes, without limitation, a control module 302, a data storage element or memory 304, a communications interface 306, and one or more input/output (I/O) interfaces 308 for communicating with associated sensors. It should be understood that FIG. 3 is a simplified representation of the sensor management module 300 for purposes of explanation and ease of description, and FIG. 3 is not intended to limit the subject matter in any way.

The control module 302 generally represents the hardware, circuitry, logic, firmware and/or other components of the sensor management module 300 configured to perform the various tasks, operations, functions and/or operations described herein in connection with the WMUs 108, 110. Depending on the embodiment, the sensor management module 300 may be implemented or realized with a general purpose processor, a microprocessor, a controller, a microcontroller, a state machine, a content addressable memory, an application specific integrated circuit, a field programmable gate array, any suitable programmable logic device, discrete gate or transistor logic, discrete hardware components, or any combination thereof, designed to perform the functions described herein. The control module 302 includes or otherwise accesses a data storage element (or memory) 304 that stores code or other computer-executable programming instructions along with configuration data that are executed or otherwise utilized by the control module 302 to support the subject matter described herein.

In the illustrated embodiment, the communications interface 306 generally represents the hardware, software, firmware and/or combination thereof that is coupled to the control module 302 and cooperatively configured to support wireless communications to/from the sensor management module 300 via a wireless network associated with the rotorcraft 102 in a conventional manner. For example, the communications arrangement may include at least one transceiver module configured to support communications on the vehicle wireless network.

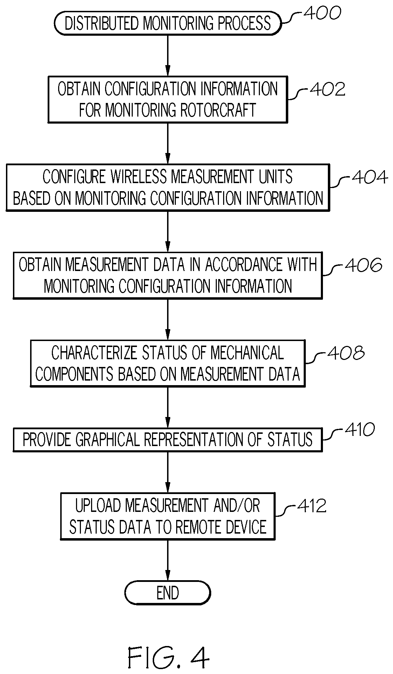

The I/O interfaces 308 generally represent the ports, terminals, sockets, connectors, or the like and related hardware for coupling the sensor management module 300 to one or more sensors via an electrical interconnection (e.g., wires 121, 123, 125, 127), which, depending on embodiment, could be any sort of bus, cable, wiring, or other interconnect. Accordingly, the interfaces 308 may alternatively be referred to herein as sensor interfaces 308. In practice, the number of sensor interfaces 308 provided in or on a housing of the sensor management module 300 may correspond to the number of measurement channels supported by the sensor management module 300. In some embodiments, for each sensor interface 308, the control module 302 include a corresponding analog-to-digital converter (ADC) or similar sampling arrangement to sample or otherwise obtain an analog measurement signal from a sensor at the sensor interface 308 and convert the analog measurement signal into a digital measurement value. That said, in other embodiments, a sensor coupled to a sensor interface 308 may include its own ADCs or sampling arrangements, such that the input received at the sensor interface 308 is a digital measurement value. In such embodiments, the control module 302 may configure the sensor to perform sampling in accordance with configuration information or commands received from the monitoring application 132, as described in greater detail below in the context of FIG. 4.

Referring now to FIG. 4, in an exemplary embodiment, the monitoring system 100 is configured to support a distributed monitoring process 400 and perform additional tasks, functions, and operations described below. The various tasks performed in connection with the illustrated process 400 may be implemented using hardware, firmware, software executed by processing circuitry, or any combination thereof. For illustrative purposes, the following description may refer to elements mentioned above in connection with FIGS. 1-3. In practice, portions of the distributed monitoring process 400 may be performed by different elements of the monitoring system 100, such as, the WMUs 108, 110, 300, the sensors 120, 122, 124, 126, the client device 130, 200, the monitoring application 132, and/or the server 134. It should be appreciated that the distributed monitoring process 400 may include any number of additional or alternative tasks, the tasks need not be performed in the illustrated order and/or the tasks may be performed concurrently, and/or the distributed monitoring process 400 may be incorporated into a more comprehensive procedure or process having additional functionality not described in detail herein. Moreover, one or more of the tasks shown and described in the context of FIG. 4 could be omitted from a practical embodiment of the distributed monitoring process 400 as long as the intended overall functionality remains intact.

Referring now to FIGS. 1-4, the illustrated distributed monitoring process 400 begins by receiving or otherwise obtaining configuration information for monitoring the rotorcraft to be implemented during operation of the rotorcraft (task 402). In one embodiment, a user may utilize the client device 130 to input or otherwise provide, to the monitoring application 132 (e.g., via one or more GUI elements presented on a GUI display), information regarding how and when measurements should be obtained during flight, and from which particular sensors 120, 122, 124, 126 at which particular time or in response to a particular event or trigger. In other embodiments, the monitoring configuration information may be input or provided at a remote device 134 and downloaded to the client device 130 from the network 138 before flight. The monitoring configuration information may identify measurement configuration parameters or settings to be utilized when obtaining measurement data, such as, for example, sampling frequencies, sampling sequences or orders, sampling durations, triggering criteria for sampling, the number of samples to be obtained, gain factors associated with the samples from a respective sensor 120, 122, 124, 126, and potentially other information for operating and sampling the onboard sensors 120, 122, 124, 126. In this regard, monitoring configuration information may be utilized to configure the WMUs 108, 110, 300 and/or sensors 120, 122, 124, 126 for obtaining automated or autonomous measurements. Additionally, in some embodiments, the monitoring configuration information may be utilized to synchronize measurements across multiple WMUs 108, 110, 300 and/or sensors 120, 122, 124, 126 onboard the rotorcraft 102. For example, each of the WMUs 108, 110, 300 could be configured to obtain measurements from each of their associated sensors 120, 122, 124, 126 upon a particular event or trigger (e.g., the rotorcraft 102 reaching a particular altitude, airspeed, orientation, or the like).

The distributed monitoring process 400 continues by configuring the sensor management modules for operation in accordance with the monitoring configuration information (task 404). In this regard, the client device 130, 200 and/or monitoring application 132 communicates with the WMUs 108, 110, 300 over the vehicle wireless network to thereby configure the measurement parameters or settings of the WMUs 108, 110, 300 and their associated sensors 120, 122, 124, 126 for obtaining measurement data in accordance with the monitoring configuration information. In an exemplary embodiment, the client device 130, 200 and/or monitoring application 132 transmits or otherwise provides, to each of the WMUs 108, 110, 300 over the wireless network, a configuration file, which, in turn is stored or otherwise maintained by WMUs 108, 110, 300 in the respective file system associated with their data storage 304. Thereafter, the client device 130, 200 and/or monitoring application 132 transmits or otherwise provides, to each of the WMUs 108, 110, 300 over the wireless network, a command that causes the control modules 302 of the respective WMUs 108, 110, 300 to read or execute the configuration file and apply the measurement configuration parameters and settings to the hardware and/or software associated with the sensor interfaces 308. In this regard, the configuration file may include measurement configuration information (e.g., sampling frequencies, sampling sequences, identifications of which sensor to sample, triggering criteria for samples, and the like), which, in turn, may be utilized by the control modules 302 of the respective WMUs 108, 110, 300 to configure its associated sensors 120, 122, 124, 126 to obtain measurement data in accordance with the monitoring configuration information. In other embodiments, the control modules 302 of a respective WMU 108, 110, 300 may communicate with an associated sensor 120, 122, 124, 126 via a sensor interface 308 to configure that particular sensor 120, 122, 124, 126 for operation in accordance with the monitoring configuration information (e.g., programming the sampling frequency of a particular sensor 120, 122, 124, 126).

It should be noted that in lieu of a configuration file, the client device 130, 200 and/or monitoring application 132 may transmit or otherwise provide configuration command signals to the WMUs 108, 110 via the wireless network or otherwise interact with the WMUs 108, 110 to command, configure, or otherwise program the desired settings for obtaining measurement data from the respective sensors 120, 122, 124, 126 into the WMUs 108, 110 and/or sensors 120, 122, 124, 126. Thus, in some embodiments, a command or request transmitted by client device 130, 200 may include one or more measurement parameters or settings to be implemented or otherwise utilized by the WMUs 108, 110 and/or sensors 120, 122, 124, 126 for the next iteration of measurements. Accordingly, in some embodiments, the WMUs 108, 110 and/or sensors 120, 122, 124, 126 are dynamically configured (or reconfigured) on a command-by-command basis.

After configuring the sensor management modules to support the monitoring configuration information, the distributed monitoring process 400 continues by receiving or otherwise obtaining measurement data from the distributed sensors in accordance with the monitoring configuration information (task 406). In this regard, the client device 130, 200 and/or monitoring application 132 receives measurement data obtained by the sensors 120, 122, 124, 126 over the wireless network via the WMUs 108, 110, with the measurement data being sampled or otherwise obtained as prescribed by the monitoring configuration information. In some embodiments, the WMUs 108, 110 may support autonomous or automated sampling of the sensors 120, 122, 124, 126 according to the measurement configuration information from the configuration files and buffer or otherwise store the corresponding measurement data samples until requested by the client device 130, 200 and/or monitoring application 132. Thus, if satisfaction of a triggering criterion is detected or otherwise identified (e.g., the rotorcraft 102 reaching a particular altitude, airspeed, or the like), a WMU 108, 110 may automatically initiate obtaining the desired number of contemporaneous measurement data samples from its associated sensors 120, 122, 124, 126 with a desired sampling frequency, sequence or ordering, and the like and store the measurement data samples in memory 304 until measurement data is requested by the client device 130, 200 and/or the monitoring application 132. That said, in other embodiments, the WMUs 108, 110 may automatically upload or transfer measurement data samples as they are received back to the client device 130, 200 and/or the monitoring application 132 via the wireless network.

In various embodiments, the WMUs 108, 110 may initiate sampling in response to receiving a command or request from the client device 130, 200 and/or the monitoring application 132. For example, in one embodiment, the monitoring application 132 may store or otherwise maintain triggering criteria associated with the monitoring configuration information and then monitor status information associated with the rotorcraft 102 to detect or otherwise identify when a triggering criterion is satisfied. In this regard, the client device 130, 200 and/or the monitoring application 132 may communicate with a navigation system, a flight management system, one or more onboard avionics systems and the like to monitor the current operational status of the rotorcraft 102. When the current status satisfies a sampling triggering criterion, the monitoring application 132 transmits or otherwise provides a measurement request to one or more of the WMUs 108, 110, which, in turn, initiates sampling of its associated sensors 120, 122, 124, 126 according to the previously configured measurement configuration information and provides corresponding measurement data back to the monitoring application 132 via the wireless network. Additionally, the monitoring application 132 may provide a GUI display including one or more GUI elements adapted to allow a user to manually initiate sampling. In response to a user input to obtain measurement data, the monitoring application 132 transmits or otherwise provides a measurement request to one or more of the WMUs 108, 110, which in turn, provide corresponding measurement data as described above.

In one or more embodiments, the monitoring configuration allows the client device 130, 200 and/or the monitoring application 132 to synchronize measurements across WMUs 108, 110. For example, the configuration file may allow the control module 302 of the WMUs 108, 110, 300 to receive or otherwise identify a broadcast measurement request on the wireless network. In this regard, a broadcast measurement request is a message broadcast by the client device 130, 200 and/or the monitoring application 132 that does not necessarily designate or identify a particular WMU 108, 110 or includes a special header or other encoding that indicates each of the WMUs 108, 110 should act on the request. Thus, an individual request transmitted by the client device 130, 200 and/or the monitoring application 132 may initiate sampling by multiple WMUs 108, 110 substantially simultaneously or concurrently. Moreover, by configuring the sampling frequencies, sampling sequences or orders, and the like associated with sampling the sensors 120, 122, 124, 126, samples from a particular sensor 120, 122, 124, 126 may be effectively synchronized with those of another corresponding sensor 120, 122, 124, 126 of the same type associated with a different WMU 108, 110. For example, tachometers associated with different WMUs 108, 110 may be sampled at substantially the same time in response to a broadcast measurement request.

In one or more exemplary embodiments, the WMUs 108, 110 generate and provide a formatted measurement file containing the raw measurement data captured by the respective sensors 120, 122, 124, 126 that includes a header, which indicates the measurement configuration or settings associated with the raw measurement data encapsulated in the file. In this regard, the measurement configuration information in the header may be utilized by the monitoring application 132 to interpret the raw measurement data contained in the formatted measurement file, for example, by assigning appropriate sampling times or other temporal or sequential attributes to individual samples contained within the measurement file. Thus, the measurement configuration information contained in the header of the formatted measurement file may be influenced by or otherwise correspond to the commanded measurement configuration provided by the client device 130 and/or the monitoring application 132.

In the illustrated embodiment, the distributed monitoring process 400 continues by characterizing or otherwise determining the status of various mechanical components of the rotorcraft at the mobile device based on the measurement data and generating or otherwise providing graphical representations or indicia of the status at the mobile device (tasks 408, 410). The monitoring application 132 analyzes or otherwise processes the measurement data to identify or otherwise determine the status of the mechanical component(s) of the vehicle based on their observed operational characteristic(s) during the operation. In this regard, for a respective mechanical component of the rotorcraft 102, the monitoring application 132 calculates or otherwise determines a metric representative of the relative health of that mechanical component based on the raw measurement data corresponding to the operational characteristics of that mechanical component (e.g., measurement data from the sensors 120, 122, 124, 126 proximate that component) using one or more diagnostic algorithms.

For example, the monitoring application 132 may obtain voltage measurement data samples from an onboard acceleration or vibrational sensor (e.g., where the voltage measurements are proportional to the physical excitation), perform a time-synchronous resample proportional to the rotation of a gear in a drive assembly, provide the resampled measurement data to a gear health algorithm that outputs a metric indicative of the health of the gear (or gearbox), compare the metric to one or more applicable thresholds to ascertain the current condition of the gear (or gearbox), and then characterize the current health status of the gear (or gearbox) accordingly. As another example, the monitoring application 132 may perform a fast Fourier transform on the measurement data samples, detect a peak frequency around the speed of an engine turbine of the drive assembly, compare the detected frequency to one or more applicable thresholds to ascertain the current condition of the engine, and then update the current health status of the engine accordingly. In yet another embodiment, the monitoring application 132 may obtain raw voltage measurement data samples for a particular number of revolutions of a main rotor of a rotor assembly, perform a digital filter transformation to obtain the amplitude and phase of the fundamental vibration of the main rotor, provide the amplitude and phase to a rotor health algorithm that outputs a metric indicative of the health of the rotor, compare the metric to one or more applicable thresholds to ascertain the current condition of the rotor, and then characterize the current health status of the main rotor of the rotor assembly accordingly.

For each respective mechanical component being monitored, the monitoring application 132 may classify or categorize the health of that mechanical component based on the metric indicative of its relative health and then display a graphical indication of the relative health of the particular mechanical component on the client device 130, 200 and/or display device 210. In some embodiments, a visually distinguishable characteristic may be utilized to indicate the relative health of a component. For example, a green-colored indicator may be utilized to indicate a healthy status, a red-colored indicator may be utilized to indicate an unhealthy status that requires maintenance, a yellow-colored indicator may be utilized to indicate a questionable health status that may need attention, and so on. For example, if the metric indicative of the health of a gearbox in a drive assembly is above a first threshold value, the monitoring application 132 may identify the gearbox as being healthy and indicate the gearbox is healthy (e.g., by displaying a green-colored indicator associated with the gearbox). Conversely, if the metric indicative of the health of a gearbox in the drive assembly is above a second threshold value, the monitoring application 132 may identify the gearbox as being elevated and indicate the gearbox is unhealthy (e.g., by displaying a yellow-colored indicator for the health of the gearbox to indicate an unhealthy status). The graphical representations of the component health indicate those mechanical components that may need attention or further evaluation of continued operation (e.g., to verify compliance with applicable regulatory and/or operations guidelines). It should be appreciated there are numerous ways to classify, categorize and/or indicate the relative health of a particular mechanical component, and the subject matter described herein is not intended to be limited to any particular classification or display scheme.

In the illustrated embodiment, the distributed monitoring process 400 continues by transferring or otherwise uploading measurement data and/or health status data from the mobile device to a remote device (task 412). For example, the user may manipulate the monitoring application 132 to upload or transmit measurement data obtained from the WMUs 108, 110 and/or the corresponding health status data determined by the monitoring application 132 to the remote server 134 via the network 138 for storage in the database 136 and/or further analysis at the remote server 134. In this regard, the remote server 134 may store or manage flight logs for the rotorcraft 102 that allows for analysis of the relative health of the mechanical components of the rotorcraft 102 over time based on the measurement data and/or status data from various flights to identify historical trends, perform predictive health or maintenance analysis, or the like. In some embodiments, the remote server 134 may also provide more robust historical health analysis or trend data back to the client device 130, 200 for presentation on the display device 210 by the monitoring application 132, thereby allowing a user onboard the rotorcraft 102 to review this information on the client device 130, 200.

Referring to FIGS. 1-4, the subject matter described herein allows for HUMS features and functionality to be implemented at a mobile device as part of a monitoring system that includes wireless sensor management modules distributed about a vehicle and supporting multiple different sensors mounted or positioned at or near different mechanical components of a vehicle. Thus, dedicated HUMS hardware and cabling is not required to be installed, which is advantageous for small helicopters and other rotorcraft were various weight and size restrictions may exist. The mobile device allows a user to configure the HUMS measurements at the mobile device, and then distributed the measurement configuration parameters across the different sensor management modules, thereby allowing the user of the mobile device to control the manner in which the outputs of the sensors are sampled to obtain measurement data. The mobile device may also configure the different sensor management modules to support synchronization of sampling across the sensor management modules in response to a measurement request broadcast by the mobile device, which, in turn allows measurements from different locations to be temporally associated with one another for analysis.

The HUMS application at the mobile device characterizes the mechanical components based on the corresponding measurement data obtained from the sensors disposed proximate to or mounted near the respective mechanical components and then provides corresponding graphical indicia of the health or condition of the different mechanical components at the mobile device. Thus, a user can quickly and conveniently ascertain the condition of the various vehicle components. Additionally, the mobile device may be utilized to upload measurement data to a remote device via a separate network that the sensor management modules do not communicate on, or alternatively, to download other historical measurement or analysis data that may not be available at the mobile device from the remote device. Thus, a user can quickly and conveniently perform a historical analysis of the health or condition of the different mechanical components using the mobile device in addition to being apprised of the current health or condition, thereby allowing for more informed choices regarding maintenance or other remedial actions to be made by the user.

Referring now to FIG. 5, in one or more exemplary embodiments, the monitoring system 100 is configured to support a retrospective measurement data synchronization process 500 and perform additional tasks, functions, and operations described below. The various tasks performed in connection with the illustrated process 500 may be implemented using hardware, firmware, software executed by processing circuitry, or any combination thereof. For illustrative purposes, the following description may refer to elements mentioned above in connection with FIGS. 1-3. In practice, portions of the measurement data synchronization process 500 may be performed by different elements of the monitoring system 100, such as, the WMUs 108, 110, 300, the sensors 120, 122, 124, 126, the client device 130, 200, the monitoring application 132, and/or the server 134. It should be appreciated that the measurement data synchronization process 500 may include any number of additional or alternative tasks, the tasks need not be performed in the illustrated order and/or the tasks may be performed concurrently, and/or the measurement data synchronization process 500 may be incorporated into a more comprehensive procedure or process having additional functionality not described in detail herein. Moreover, one or more of the tasks shown and described in the context of FIG. 5 could be omitted from a practical embodiment of the measurement data synchronization process 500 as long as the intended overall functionality remains intact.

In one or more exemplary embodiments, the measurement data synchronization process 500 is performed when obtaining measurement data (e.g., task 406) in connection with the distributed monitoring process 400 of FIG. 4. As described in greater detail below, the measurement data synchronization process 500 is performed to temporally associate or otherwise align measurement data samples from different WMUs 108, 110 in a common clock domain by the client device 130 broadcasting one or more synchronization messages at the start of a measurement window and one or more subsequent synchronization messages at or around the measurement window. In this regard, the first set of one or more synchronization messages may define the start of the measurement window and trigger the different WMUs 108, 110 performing a measurement sequence configured in accordance with monitoring configuration information (e.g., task 404), and the second set of one or more synchronization messages may define the end of the measurement window and triggering the end or termination of the measurement sequences.

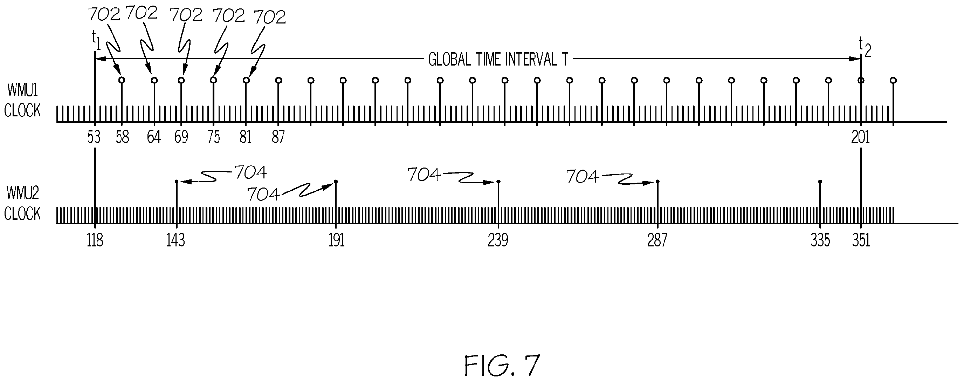

Timestamps assigned to the broadcast messages by the WMUs 108, 110 are utilized to relate the clock domains of the WMUs 108, 110 to one another and/or the clock domain of the client device 130, which, in turn, allows measurement data samples obtained by one of the WMUs 108, 110 during the measurement window to be translated to a clock domain of the other WMU 108, 110 based on the relationship between the respective broadcast message timestamps. This, in turn allows for measurement data samples to be retrospectively paired or otherwise associated with one another (or alternatively discarded or dissociated) to achieve the desired synchronization accuracy between different WMUs 108, 110 or different sensors 120, 122, 124, 126, as described in greater detail below in the context of FIG. 7.

Referring to FIG. 5 with continued reference to FIGS. 1-3, the illustrated measurement data synchronization process 500 begins by broadcasting or otherwise transmitting one or more measurement start synchronization messages to each of the WMUs 108, 110 onboard the aircraft 102 (task 502). In this regard, when the monitoring application 132 determines that synchronized measurements from different distributed WMUs 108, 110 and/or sensors 120, 122, 124, 126 is necessary or desired, the monitoring application 132 causes the client device 130 to transmit one or more messages that are configured to be received by each of the WMUs 108, 110 (e.g., by modifying or configuring a header or other portion of the message to designate it as a broadcast message for handling by any recipients). In exemplary embodiments, the each of the WMUs 108, 110 is configured to record a value or time associated with its local clock as a timestamp associated with each of the received broadcast messages. In one or more embodiments, the broadcast messages are realized as wake-up messages that result in a wake-up signal generated at a particular general purpose input/output (GPIO) pin of a control module 302 of a WMU 108, 110 that causes the control module 302 to execute a software routine to assign a timestamp to the received message in a deterministic and expeditious manner, and the timestamp is then stored or maintained in association with the message.

The measurement data synchronization process 500 continues by receiving or otherwise obtaining start synchronization timestamp data from each of the WMUs 108, 110 onboard the aircraft 102 (task 504). In exemplary embodiments, the WMUs 108, 110 are configured to verify or otherwise identify the broadcast measurement start synchronization messages as valid synchronization messages. In response to verifying a valid measurement start message, the WMUs 108, 110 are configured to automatically initiate a previously configured measurement sequence. In exemplary embodiments, the WMUs 108, 110 also automatically respond to valid start synchronization broadcast messages by automatically transmitting one or more response messages back to the client device 130 that indicate, to the monitoring application 132, the local timestamp value assigned to respective ones of the broadcast measurement start synchronization messages by the respective WMU 108, 110. In this regard, the response messages from an individual WMU 108, 110 includes start synchronization timestamp data that indicates the times at which the broadcast measurement start synchronization messages were received at that individual WMU 108, 110 referenced to the clock domain of that WMU 108, 110. In some embodiments, the response messages may be transmitted by the WMUs 108, 110 concurrently to the WMUs 108, 110 performing a measurement sequence. However, in other embodiments, the response messages may be transmitted by the WMUs 108, 110 concurrently to the WMUs 108, 110 after completion of the measurement sequence, for example, in response to a request from the monitoring application 132 or accompanying measurement data communications.

After measurements are initiated, the measurement data synchronization process 500 subsequently broadcasts one or more measurement stop synchronization messages and receives stop synchronization timestamp data from each of the WMUs 108, 110 onboard the aircraft 102 (tasks 506, 508). In a similar manner as described above, when the monitoring application 132 determines that sufficient time has elapsed for synchronized measurement sequences to be completed, the monitoring application 132 causes the client device 130 to transmit one or more broadcast messages indicating termination of the synchronized measurement window. In exemplary embodiments, the stop synchronization messages are configured similar to the start synchronization messages, so that each of the WMUs 108, 110 records a local time value as a timestamp associated with each of the received broadcast messages in a deterministic manner. The WMUs 108, 110 verify or otherwise validate the broadcast measurement stop synchronization messages, and in response to verifying a valid measurement stop message, the WMUs 108, 110 are configured to automatically terminate measurements if they have not already timed out or completed. In exemplary embodiments, the WMUs 108, 110 automatically respond by transmitting one or more response messages back to the client device 130 that indicate, to the monitoring application 132, the local timestamp value assigned to respective ones of the broadcast measurement stop synchronization messages by the respective WMU 108, 110. However, in alternative embodiments, the response messages may be transmitted by the WMUs 108, 110 in response to a request from the monitoring application 132 or in connection with other data communications.

Still referring to FIG. 5, the measurement data synchronization process 500 continues by receiving or otherwise obtaining measurement data samples corresponding to the synchronized measurement window from the WMUs 108, 110 and temporally aligning or otherwise associating measurement data samples from different WMUs 108, 110 in a common clock or time domain using the synchronization timestamp data (tasks 510, 512). In this regard, the monitoring application 132 causes the client device 130 to transmit one or more requests for measurement data from the WMUs 108, 110, which, in turn are configured to respond by transmitting the requested measurement data samples obtained during the synchronized measurement window which are timestamped according to the local clock associated with the respective WMUs 108, 110. As described in greater detail below in the context of FIG. 7, based on the relationship between the time associated with the broadcast of the measurement start synchronization messages, the time associated with the broadcast of the measurement stop synchronization messages, and the start and stop synchronization timestamp data, the monitoring application 132 establishes a correlation or relationship between the clock domains of the different WMUs 108, 110. The monitoring application 132 then uses the relationship to translate or otherwise convert the local timestamp values associated with one or more measurement data samples to a corresponding timestamp value in a reference clock domain that allows the measurement data sample(s) to be synchronized with measurement data samples from another WMU 108, 110. In exemplary embodiments, the reference clock domain utilized for reassigning timestamp values is the local clock domain of the WMUs 108, 110 having the highest clock frequency, however, in other embodiments, the reference clock domain could be a local clock domain of the client device 130.

Once measurement data samples from different WMUs 108, 110 are temporally aligned and referenced to a common reference clock domain, the monitoring application 132 may associate or dissociate measurement data samples from different WMUs 108, 110 based on the reference timestamp values and the relative time differences between measurement data samples. For example, when a VHM algorithm, HUMS algorithm, or other diagnostics algorithm requires data samples from different WMUs 108, 110 to be associated or paired with a particular level of synchronization accuracy, the monitoring application 132 may identify measurement data samples from different WMUs 108, 110 having a relative time difference that is less than a synchronization threshold that are available for pairing or otherwise associating as synchronized measurements while excluding pairing or associating measurement data samples with a relative time difference that is greater than the synchronization threshold. The associated measurement data samples from are then utilized by the monitoring application 132 to characterize the condition of the aircraft 102 or a mechanical component 104, 106, 114, 116 thereof.

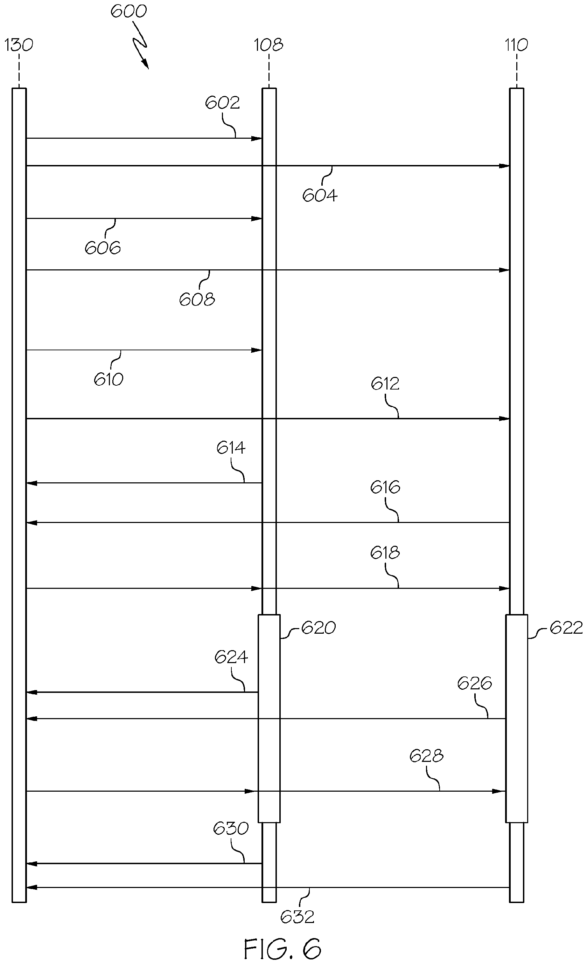

FIG. 6 depicts an exemplary sequence 600 of communications within a monitoring system 100 in accordance with one or more exemplary embodiments of the measurement data synchronization process 500 of FIG. 5. The illustrated communications sequence 600 begins with the monitoring application 132 at the client device 130 transmitting configuration files 602, 604 to the WMUs 108, 110 via the wireless network and then transmitting commands 606, 608 to the WMUs 108, 110 to execute or otherwise implement their respective configuration files as described above (e.g., task 404). In this manner, the WMUs 108, 110 may be preconfigured for obtaining measurement data samples during a synchronized measurement window in a manner that is configured to allow measurement data samples from the different WMUs 108, 110 to be retrospectively synchronized and paired for purposes of one or more VHM, HUMS, or other diagnostics algorithms, as described in greater detail below.

The illustrated sequence 600 continues with the monitoring application 132 at the client device 130 transmitting notifications 610, 612 of a forthcoming synchronized measurement window to each of the WMUs 108, 110. In this regard, in one or more embodiments, the synchronized measurement window notifications are configured to allow the WMUs 108, 110 to clear internal communications buffers or perform other actions that allow for subsequently broadcast measurement synchronization messages to be timestamped and handled in a deterministic and expeditious manner. In the illustrated embodiment, the WMUs 108, 110 transmit or otherwise provide acknowledgment messages 614, 616 to thereby indicate, to the monitoring application 132 at the client device 130, that the WMUs 108, 110 are ready to support a synchronized measurement window in conjunction with the measurement data synchronization process 500.

After receiving indications 614, 616 that the WMUs 108, 110 are ready to support the measurement data synchronization process 500, the monitoring application 132 at the client device 130 broadcasts one or more measurement start synchronization messages 618 configured to trigger measurement sequences concurrently implemented at the WMUs 108, 110. In response to receiving and validating the measurement start synchronization messages 618, WMU 108 automatically initiates a measurement sequence 620 configured in accordance with its stored configuration file, and similarly, WMU 110 automatically initiates a measurement sequence 622 configured in accordance with its stored configuration file. As described above, the received measurement start synchronization messages are also timestamped by the respective WMUs 108, 110 upon receipt. In the illustrated embodiment, concurrently to performing the measurement sequence 620, the WMU 108 automatically transmits or otherwise provides a response message 624 that includes start synchronization timestamp data corresponding to the broadcast measurement start synchronization messages received by the WMU 108, such as, for example, a listing of the local timestamp values assigned to the broadcast measurement start synchronization messages received by the WMU 108. Similarly, concurrently to performing the measurement sequence 622, the WMU 110 automatically transmits or otherwise provides a response 626 that includes a listing of the local timestamp values assigned to the broadcast measurement start synchronization messages received by the WMU 110. That said, in other embodiments, the start synchronization timestamp data may be stored or maintained at the WMUs 108, 110 and provided to the client device 130 in response to a subsequent request from the monitoring application 132 for the start synchronization timestamp data, when transmitting measurement data samples obtained during the measurement sequences 620, 622, or the like.

In the illustrated embodiment, the monitoring application 132 at the client device 130 broadcasts one or more measurement stop synchronization messages 628 configured to terminate the measurement sequences 620, 622. For example, the monitoring application 132 at the client device 130 may implement a timer or similar feature that supports a synchronized measurement window having a fixed duration independent of the clocks associated with the WMUs 108, 110. In response to receiving and validating the measurement stop synchronization messages 628, WMUs 108, 110 automatically terminate the measurement sequences 620, 622 and automatically transmit responses 630, 632 that include stop synchronization timestamp data (e.g., a listing of the local timestamp values assigned to the broadcast measurement stop synchronization messages received by the respective WMU 108, 110). Based on the time difference between the broadcast of the measurement start synchronization messages 618 and the broadcast of the measurement stop synchronization messages 628 and the received start and stop synchronization timestamp data 624, 626, 630, 632, the monitoring application 132 establishes a correlation or relationship between the clock domains of the different WMUs 108, 110. The monitoring application 132 at the client device 130 may then request measurement data samples obtained during the measurement sequences 620, 622 from the WMUs 108, 110 and then utilize the correlation to translate the measurement data samples from at least one of the WMUs 108, 110 to a reference clock domain that allows for measurement data samples from the different WMUs 108, 110 to be paired or otherwise associated temporally within a desired synchronization accuracy threshold.

FIG. 7 depicts an exemplary relationship between the local clock domain associated with a first WMU (WMU1) and the local clock domain associated with a second WMU (WMU2) in connection with the measurement data synchronization process 500 of FIG. 5. As depicted, the WMU1 clock and the WMU2 clocks are not synchronized with respect to one another, however, the measurement data synchronization processes described herein allow for asynchronously obtained measurement data samples to be retrospectively synchronized with a desired level of synchronization accuracy, as described in greater detail below. For purposes of explanation, but without limitation, the subject matter may be described herein in the context of the first WMU corresponding to WMU 108 and the second WMU corresponding to WMU 110 in FIG. 1.

Referring to FIG. 7 and with continued reference to FIGS. 1-6, at time $t_1$, a broadcast measurement start synchronization message transmitted by the client device 130 (e.g., broadcast message 618) is received by each of the WMUs 108, 110 and contemporaneously assigned the current time value associated with its local clock. In this regard, the first WMU 108 may assign a local timestamp value of 53 to the received broadcast measurement start synchronization message and the second WMU 110 may assign a local timestamp value of 118 to the received broadcast measurement start synchronization message. Subsequently, the first WMU 108 may transmit a response to the received broadcast measurement start synchronization message that indicates the measurement start synchronization timestamp value of 53 to the client device 130 (e.g., at 624) and the second WMU 110 may transmit a response to the received broadcast measurement start synchronization message that indicates the measurement start synchronization timestamp value of 118 to the client device 130 (e.g., at 626).

In response to the measurement start synchronization message, the first WMU 108 automatically begins performing a previously configured measurement sequence 620 by sampling one or more of its associated sensors 120, 122 in a previously configured order and/or with a previously configured frequency (e.g., according to configuration file 602) to obtain measurement data samples 702 that are timestamped with the current value of the local clock (e.g., the current WMU1 clock value) at the time of sampling. For example, in the illustrated embodiment, a first measurement data sample of the measurement sequence 620 is assigned a local timestamp value of 58, a second measurement data sample of the measurement sequence 620 is assigned a local timestamp value of 64, a third measurement data sample of the measurement sequence 620 is assigned a local timestamp value of 69, and so on.

Similarly, the second WMU 110 automatically begins performing a previously configured measurement sequence 622 by sampling one or more of its associated sensors 124, 126 in a previously configured order and/or with a previously configured frequency (e.g., according to configuration file 604) to obtain measurement data samples 704 that are timestamped with the current value of the local clock at the second WMU 110 (e.g., the current WMU2 clock value) at the time of sampling. For example, in the illustrated embodiment, a first measurement data sample of the measurement sequence 622 is assigned a local timestamp value of 143, a second measurement data sample of the measurement sequence 622 is assigned a local timestamp value of 191, a third measurement data sample of the measurement sequence 622 is assigned a local timestamp value of 239, and so on.

As described above, the monitoring application 132 at the client device 130 may implement a timer or similar feature for implementing a synchronized measurement window having a finite and fixed duration (e.g., time T). The timer at the client device 130 may be initiated upon transmission of the broadcast measurement start synchronization message 618, and once the timer value indicates the desired synchronized measurement window duration ($T$) has elapsed, the monitoring application 132 at the client device 130 may automatically initiate transmission of broadcast measurement stop synchronization message 628.

At time $t_2$, the broadcast measurement stop synchronization message transmitted by the client device 130 is received by each of the WMUs 108, 110 and contemporaneously assigned the current time value associated with its local clock. In this regard, the first WMU 108 may assign a local timestamp value of 201 to the received broadcast measurement stop synchronization message and the second WMU 110 may assign a local timestamp value of 351 to the received broadcast measurement stop synchronization message. Subsequently, the first WMU 108 may transmit a response to the received broadcast measurement stop synchronization message that indicates the measurement stop synchronization timestamp value of 201 to the client device 130 (e.g., at 630) and the second WMU 110 may transmit a response to the received broadcast measurement stop synchronization message that indicates the measurement stop synchronization timestamp value of 351 to the client device 130 (e.g., at 632). The WMUs 108, 110 may also automatically terminate the measurement sequences 620, 622 and cease obtaining additional measurement data samples.

After the synchronized measurement sequences have finished, the monitoring application 132 at the client device 130 may request and obtain the measurement data samples 702, 704 corresponding to the synchronized measurement window from the WMUs 108, 110 (e.g., tasks 406, 510). Thereafter, using the synchronization timestamp data from the WMUs 108, 110, the monitoring application 132 at the client device 130 associates one or more samples 702 from the first WMU 108 with one or more samples 704 from the second WMU 110 that occurred within a synchronization threshold amount of time from one another, thereby retrospectively identifying and associating effectively synchronized measurements.

For example, in one or more embodiments, the monitoring application 132 at the client device 130 maps, translates, or otherwise converts the measurement data samples from one or more of the WMUs 108, 110 so that both sets of measurement data samples 702, 704 are temporally aligned and referenced to a common clock domain. In this regard, in exemplary embodiments, the highest frequency local clock associated with the WMUs 108, 110 is utilized as the reference clock domain. For each WMU 108, 110, the monitoring application 132 at the client device 130 determines a relative clock frequency based on the difference between its measurement stop synchronization timestamp(s) and its measurement start synchronization timestamp(s) relative to the duration of the synchronized monitoring window. In this regard, the monitoring application 132 may identify the WMU1 clock frequency ($f_{WMU1}$) as being equal to 148/T clock ticks per second (e.g., by subtracting the local measurement start timestamp value of 53 from the local measurement stop timestamp value of 201 and dividing by the time $T$), and similarly, the monitoring application 132 may identify the WMU1 clock frequency ($f_{WMU2}$) as being equal to 233/T clock ticks per second.

Based on the relationship between relative local clock frequencies, the monitoring application 132 may identify the WMU2 clock as the reference clock domain and map or otherwise convert the timestamps for the measurement data samples 702 from the WMU1 clock domain to the WMU2 clock domain. For the example depicted in FIG. 7, the equation

$$t_{m\_WMU2} = t_{start\_WMU2} + \left(t_{m\_WMU1} - t_{start\_WMU1}\right)\frac{f_{WMU2}}{f_{WMU1}}$$ may be utilized to translate the a measurement data sample timestamp in the WMU1 clock domain ($t_{m\_WMU1}$) to a corresponding timestamp in the WMU2 clock domain ($t_{m\_WMU1}$), where $t_{start\_WMU1}$ is the measurement start synchronization timestamp in the WMU1 clock domain, $t_{start\_WMU2}$ is the measurement start synchronization timestamp in the WMU2 clock domain, $f_{WMU1}$ is the WMU1 clock frequency, and $f_{WMU2}$ is the WMU2 clock frequency. Thus, the measurement data sample 702 timestamped with a WMU1 clock value of 58 may be converted to a reference timestamp value of 126 in the WMU2 clock domain, the measurement data sample 702 timestamped with a WMU1 clock value of 64 may be converted to a reference timestamp value of 135 in the WMU2 clock domain, the measurement data sample 702 timestamped with a WMU1 clock value of 69 may be converted to a reference timestamp value of 143 in the WMU2 clock domain, and so on.

Once the monitoring application 132 has referenced the sets of measurement data samples 702, 704 to a common clock domain, the monitoring application 132 retrospectively synchronizes measurement data samples from different WMUs 108, 110 by identifying pairs of measurement data samples that have the common timestamp value in the reference clock domain, or in the absence of matching timestamp values, identifying pairs of measurement data samples that are closest to one another in the reference clock domain and have a relative difference in terms of timestamp values that corresponds to a time difference that is less than a synchronization accuracy threshold. For example, in the illustrated embodiment, the monitoring application 132 may pair or otherwise associate the measurement data sample 702 from the WMU 108 having a WMU1 timestamp value of 69 with the measurement data sample 704 from the WMU 110 having a WMU2 timestamp value of 143 by virtue of the WMU1 timestamp value of 69 mapping to the WMU2 timestamp value of 143 in the WMU2 reference clock domain.

In the absence of timestamp values that match in the reference clock domain, monitoring application 132 may identify a measurement data sample 702 from the first WMU 108 that is closest to a measurement sample 704 from the second WMU 110 in the reference clock domain, and then verify the timestamp difference corresponds to a time difference that is less than a synchronization accuracy threshold. For example, for a synchronization accuracy threshold equal to one microsecond and a synchronized measurement window duration is equal to 25 microseconds (and in the absence of the measurement data sample 702 from the WMU 108 having a WMU1 timestamp value of 69), the monitoring application 132 could identify and pair or otherwise associate the measurement data sample 702 from the WMU 108 having a WMU1 timestamp value of 64 with the measurement data sample 704 from the WMU 110 having a WMU2 timestamp value of 143 by virtue of the difference between the mapped WMU2 timestamp value of 135 and the WMU2 timestamp value of 143 corresponding to a time difference that is less than one microsecond. Conversely, if the difference were greater than the synchronization accuracy threshold, the monitoring application 132 would not establish a temporal association or retroactive synchronized pairing. In some embodiments, the absence of timestamp values that match in the reference clock domain, the monitoring application 132 may identify multiple measurement data samples 702 from the first WMU 108 that are within the synchronization accuracy threshold of a measurement data sample 704 from the second WMU 110 and average, interpolate, or otherwise combine those identified measurement data samples to obtain a representative data sample value corresponding to the timestamp value of the measurement data sample 704 from the second WMU 110 that may be paired or associated with the measurement data sample 704 from the second WMU 110 as a synchronized measurement data sample.

It should be noted that although FIG. 7 depicts individual start and stop synchronization messages, as described above, multiple broadcast start and stop synchronization messages may be utilized in practice to account for potential transmission errors. In such embodiments, the timestamp data provided by the WMUs 108, 110 may include a listing of the received synchronization messages and corresponding timestamps by the respective WMU 108, 110. In this regard, the monitoring application 132 may utilize timestamp data for messages received by each of the WMUs 108, 110 and discard timestamp data for messages that were not received by all of the WMUs 108, 110.

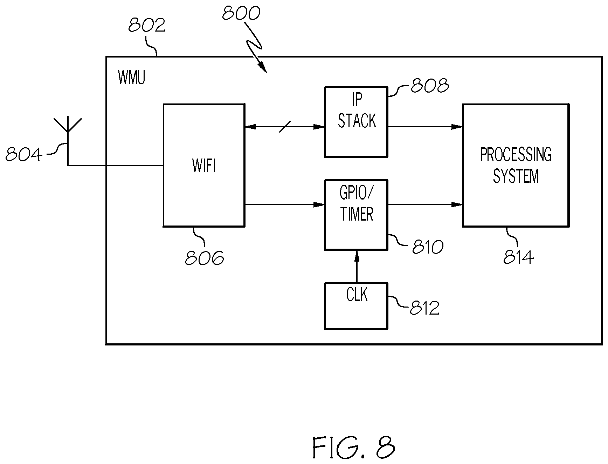

FIG. 8 depicts an exemplary embodiment of a communications system 800 of a WMU 802 that is configured to support the measurement data synchronization process 500 and the communication sequence 600 depicted in FIG. 6. In this regard, the communications system 800 includes an antenna 804 coupled to a wireless communications module 806 (e.g., communications interface 306), an internet protocol (IP) stack module 808, a GPIO timer module 810 coupled to a clock module 812, and a processing system 814. In some embodiments, the IP stack module 808, GPIO timer module 810, the clock module 812 and the processing system 814 may be integrated as part of a control module (e.g., control module 302).

In response to the wireless communications module 806 receiving a broadcast synchronization message via the antenna 804, the wireless communications module 806 generates or otherwise provides a wake-up signal to the GPIO timer module 810, which, in turn, results in the GPIO timer module 810 sampling, capturing, or otherwise obtaining the current timer value output by the clock module 812 and providing the current timer value to the processing system 814 as a timestamp to be assigned to the payload of the received message. The broadcast synchronization message is provided to the IP stack module 808, which provides the payload of the broadcast synchronization message to the processing system 814 after verifying the WMU 802 is a valid recipient of the message (e.g., by virtue of the broadcast indicia in the message header). The processing system 814 assigns the timestamp value from the GPIO timer module 810 to the broadcast synchronization message payload. In exemplary embodiments, after verifying the broadcast synchronization message payload corresponds to a valid measurement synchronization message, the processing system 814 automatically starts or stops the measurement sequence as appropriate. In one or more embodiments, the processing system 814 also automatically generates a measurement synchronization response message that includes or otherwise indicates the timestamp value from the local clock module 812 that was assigned to the received broadcast measurement synchronization message and automatically initiates transmission of the measurement synchronization response message back to the monitoring application 132 at the client device 130 (e.g., via the wireless module 806 and antenna 804). In exemplary embodiments, the wake-up signal causes the GPIO timer module 810 and/or the processing system 814 to prioritize processing the received message over other tasks, which increases the determinism of the synchronization message handling.

Referring to FIG. 8 with reference to FIGS. 5-6, the delay between the synchronized measurement request messages 610, 612 transmitted by the client device 130 and the synchronized measurement ready acknowledgment messages 614, 616 allows for the processing system 814 to process or otherwise clear any buffered data from the IP stack module 808 and ensure that the wireless module 806 is done communicating data, so that a broadcast measurement start synchronization message 618 received at the WMUs 108, 110, 802 is processed expeditiously by the wireless module 806 and the IP stack module 808 and deterministically timestamped according to the local clock module 812 by virtue of the hardware wake-up signal provided by the wireless module 806. This reduces uncertainty or variability in the timestamping to mitigate non-determinism of the synchronization message processing at the WMUs 108, 110, 802. Broadcast measurement stop synchronization messages 628 may be processed and responded to in a similar manner.

By virtue of the measurement data synchronization processes described herein, the local clock frequency at each WMU can be accurately and deterministically determined, which, in turns allows for measurement data samples timestamped according to different clock domains with different frequencies to be retrospectively assigned timestamps according to a common reference clock domain. Measurement data samples from different WMUs can then be temporally aligned or associated with one another as synchronized sets of measurement data samples in the reference clock domain with a desired level of synchronization accuracy. Thus, even as various factors may cause the frequency of the oscillators of the different WMUs to vary with respect to one another, measurement data samples from the different WMUs may be temporally aligned to establish effectively synchronous sets of measurement data samples without having to synchronize the local clocks or account for other variations between the local clocks prior to initiating measurement sequences. COTS wireless transceiver modules lacking direct support of synchronization can be utilized in the WMUs without any adjustments to the communications stack layers and without the messaging overhead associated with other synchronization methods (e.g., the 802.11 time synchronization function (TSF)).

For the sake of brevity, conventional techniques related to rotor track and balance, health and usage monitoring, onboard sensor systems, wireless networking, wireless communications, sampling, timestamping, broadcasting or multicasting, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

The subject matter may be described herein in terms of functional and/or logical block components, and with reference to symbolic representations of operations, processing tasks, and functions that may be performed by various computing components or devices. It should be appreciated that the various block components shown in the figures may be realized by any number of hardware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices. Furthermore, embodiments of the subject matter described herein can be stored on, encoded on, or otherwise embodied by any suitable non-transitory computer-readable medium as computer-executable instructions or data stored thereon that, when executed (e.g., by a processing system), facilitate the processes described above.

The foregoing description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter. In addition, certain terminology may also be used in the following description for the purpose of reference only, and thus are not intended to be limiting.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing an exemplary embodiment of the subject matter. It should be understood that various changes may be made in the function and arrangement of elements described in an exemplary embodiment without departing from the scope of the subject matter as set forth in the appended claims.

**Claims**

1. A method of monitoring health of a vehicle (102), the method comprising:

broadcasting, by a client device (130) over a wireless network (138), a plurality of measurement synchronization messages corresponding to a measurement window to a plurality of measurement units onboard the vehicle (102);
obtaining, at the client device (130), synchronization timestamp data corresponding to the plurality of measurement synchronization messages from each of the plurality of measurement units;
obtaining, at the client device (130), measurement data obtained during the measurement window from each of the plurality of measurement units;
associating one or more samples of the measurement data from a first measurement unit (108, 300, 802) of the plurality of measurement units with one or more samples of the measurement data from a second measurement unit (110, 300, 802) of the plurality of measurement units based on the synchronization timestamp data, resulting in associated samples of the measurement data, **characterized in that** the one or more samples of the measurement data from the first measurement unit (108, 300, 802) are timestamped according to a first local clock associated with the first measurement unit (108, 300, 802), the one or more samples of the measurement data from the second measurement unit (110, 300, 802) are timestamped according to a second local clock associated with the second measurement unit (110, 300, 802), and a first frequency of the first local clock is different from a second frequency of the second local clock; and
characterizing a condition of the vehicle (102) based at least in part on the associated samples of the measurement data.

2. The method of claim 1, wherein:

the first measurement unit (108, 300, 802) is coupled to one or more sensing arrangements (120, 122) mounted onboard the vehicle (102) to provide first measurement data samples corresponding to a first mechanical component (104, 106) of the vehicle (102);
the second measurement unit (110, 300, 802) is coupled to one or more sensing arrangements (124, 126) mounted onboard the vehicle (102) to provide second measurement data samples corresponding to a second mechanical component (114, 116) of the vehicle (102); and
associating the one or more samples of the measurement data from the first measurement unit (108, 300, 802) with the one or more samples of the measurement data from the second measurement unit (110, 300, 802) comprises identifying a synchronized subset of the first measurement data samples and the second measurement data samples in a reference clock domain; and
characterizing the condition comprises a health and usage monitoring systems (HUMS) application at the client device (130) determining the condition based on the synchronized subset of the first measurement data samples and the second measurement data samples.

3. The method of claim 1, wherein:

the first measurement unit (108, 300, 802) is coupled to one or more sensing arrangements (120, 122) mounted onboard the vehicle (102) to provide first measurement data samples corresponding to a first mechanical component (104, 106) of the vehicle (102);
the first measurement data samples are timestamped according to a first clock domain associated with the first measurement unit (108, 300, 802);
the second measurement unit (110, 300, 802) is coupled to one or more sensing arrangements (124, 126) mounted onboard the vehicle (102) to provide second measurement data samples corresponding to a second mechanical component (114, 116) of the vehicle (102);
the second measurement data samples are timestamped according to a second clock domain associated with the second measurement unit (110, 300, 802); and
associating the one or more samples of the measurement data from the first measurement unit (108, 300, 802) with the one or more samples of the measurement data from the second measurement unit (110, 300, 802) comprises:

translating at least one of the first measurement data samples and the second measurement data samples to a reference clock domain; and
associating one or more of the first measurement data samples with one or more of the second measurement data samples in the reference clock domain.

4. The method of claim 3, wherein associating the one or more of the first measurement data samples with the one or more of the second measurement data samples in the reference clock domain comprises identifying the one or more of the first measurement data samples having a timestamp difference with respect to the one or more of the second measurement data samples in the reference clock domain that is less than a synchronization threshold.

5. The method of claim 1, wherein:

broadcasting the plurality of measurement synchronization messages comprises:

broadcasting a measurement start synchronization message to initiate the measurement window; and
broadcasting a measurement stop synchronization message to terminate the measurement window; and

the synchronization timestamp data indicates local timestamps associated with receipt of the measurement start synchronization message and receipt of the measurement stop synchronization message from each of the plurality of measurement units.

6. The method of claim 5, wherein associating the one or more samples of the measurement data from the first measurement unit (108, 300, 802) with the one or more samples of the measurement data from the second measurement unit (110, 300, 802) comprises:

determining the first frequency associated with the first measurement unit (108, 300, 802) based on the local timestamps associated with receipt of the measurement start synchronization message and receipt of the measurement stop synchronization message by the first measurement unit (108, 300, 802);
determining the second frequency associated with the second measurement unit (110, 300, 802) based on the local timestamps associated with receipt of the measurement start synchronization message and receipt of the measurement stop synchronization message by the second measurement unit (110, 300, 802); and
aligning the one or more samples of the measurement data from the first measurement unit (108, 300, 802) with the one or more samples of the measurement data from the second measurement unit (110, 300, 802) based at least in part on a relationship between the first frequency and the second frequency.

7. The method of claim 6, wherein aligning the one or more samples of the measurement data from the first measurement unit (108, 300, 802) with the one or more samples of the measurement data from the second measurement unit (110, 300, 802) comprises translating at least one of the one or more samples of the measurement data from the first measurement unit (108, 300, 802) and the one or more samples of the measurement data from the second measurement unit (110, 300, 802) to a common reference clock domain based at least in part on the relationship between the first frequency and the second frequency.

8. The method of claim 1, further comprising the client device (130) obtaining current status information for the vehicle (102) from an onboard system, wherein the client device (130) automatically initiates broadcasting the plurality of measurement synchronization messages based at least in part on the current status information.

9. The method of claim 1, wherein the vehicle (102) comprises a rotorcraft (102) including a rotor (106) assembly, wherein characterizing the condition of the vehicle (102) comprises performing rotor (106) track and balance analysis using the associated samples of the measurement data.

10. A monitoring system (100) for a vehicle (102), the monitoring system (100) comprising:

a first measurement module onboard the vehicle (102) to provide first measurement data samples corresponding to a first mechanical component (104, 106) of the vehicle (102) during a measurement window;
a second measurement module onboard the vehicle (102) to provide second measurement data samples corresponding to a second mechanical component (114, 116) of the vehicle (102) during the measurement window;

and

an electronic device communicatively coupled to the first measurement module and the second measurement module over a wireless network (138) to:

broadcast a plurality of measurement synchronization messages corresponding to the measurement window;

receive first synchronization timestamp data corresponding to receipt of the plurality of measurement synchronization messages by the first measurement module;

receive second synchronization timestamp data corresponding to receipt of the plurality of measurement synchronization messages by the second measurement module;

receive the first measurement data samples from the first measurement module;

receive the second measurement data samples from the second measurement module;

associate one or more of the first measurement data samples with one or more of the second measurement data samples based at least in part on the first synchronization timestamp data and the second synchronization timestamp data; and

characterize a condition of the vehicle (102) based at least in part on the associated measurement data samples, **characterized in that**:

the first measurement data samples are timestamped according to a first local clock associated with the first measurement module;

the second measurement data samples are timestamped according to a second local clock associated with the second measurement module; and

a first frequency of the first local clock is different from a second frequency of the second local clock.

11. The monitoring system (100) of claim 10, wherein each of the one or more of the first measurement data samples is within a synchronization threshold time difference of an associated one of the one or more of the second measurement data samples.

12. The monitoring system (100) of claim 10, wherein the one or more of the first measurement data samples are associated with the one or more of the second measurement data samples in a reference clock domain based at least in part on the first synchronization timestamp data and the second synchronization timestamp data.

13. The monitoring system (100) of claim 10, wherein:

the first local clock and the second local clock are asynchronous; and

the one or more of the first measurement data samples are associated with the one or more of the second measurement data samples in a reference clock domain based at least in part on the first synchronization timestamp data and the second synchronization timestamp data.

14. The monitoring system (100) of claim 10, wherein:

the first synchronization timestamp data comprises a first plurality of timestamps according to the first local clock corresponding to receipt of the plurality of measurement synchronization messages by the first measurement module;

the second synchronization timestamp data comprises a second plurality of timestamps according to the second local clock corresponding to receipt of the plurality of measurement synchronization messages by the second measurement module;

the electronic device is configured to determine the first frequency of the first local clock based at least in part on the first plurality of timestamps, determine the second frequency of the second local clock based at least in part on the second plurality of timestamps, translate at least one of the first measurement data samples and the second measurement data samples to a reference clock domain based at least in part on a relationship between the first frequency and the second frequency, and associate the one or more of the first measurement data samples with the one or more of the second measurement data samples based on a difference in the reference clock domain that is less than a synchronization threshold;

the plurality of measurement synchronization messages comprises a measurement start synchronization message initiating the measurement window and a measurement stop synchronization message terminating the measurement window;

the first plurality of timestamps comprises a first timestamp value corresponding to receipt of the measurement start synchronization message and a second timestamp value corresponding to receipt of the measurement stop synchronization message;

the second plurality of timestamps comprises a third timestamp value corresponding to receipt of the measurement start synchronization message and a fourth timestamp value corresponding to receipt of the measurement stop synchronization message;

the electronic device is configured to determine the first frequency based on a first difference between the second timestamp value and the first timestamp value; and

the electronic device is configured to determine the second frequency based on a second difference between the fourth timestamp value and the third timestamp value.

**Patentansprüche**

1. Verfahren zur Überwachung des Zustands eines Fahrzeugs (102), wobei das Verfahren umfasst:

von einem Client-Gerät (130) Senden einer Vielzahl von Messsynchronisationsmeldungen, die einem Messfenster entsprechen, über ein drahtloses Netzwerk (138) an mehrere Messeinheiten an Bord des Fahrzeugs (102);

Erhalten von Synchronisationszeitstempeldaten an dem Client-Gerät (130), die der Vielzahl von Messsynchronisationsmeldungen entsprechen, von jeder der Vielzahl von Messeinheiten;

Erhalten von Messdaten, die während des Messfensters von jeder der Vielzahl von Messeinheiten erhalten wurden, an dem Client-Gerät (130);

Assoziieren eines oder mehrerer Abtastwerte der Messdaten von einer ersten Messeinheit (108, 300, 802) der Vielzahl von Messeinheiten mit einem oder mehreren Abtastwerten der Messdaten von einer zweiten Messeinheit (110, 300, 802) der Vielzahl von Messeinheiten basierend auf den Synchronisationszeitstempeldaten, was in assoziierten Abtastwerten der Messdaten resultiert, **dadurch gekennzeichnet, dass** der eine oder die mehreren Abtastwerte der Messdaten von der ersten Messeinheit (108, 300, 802) gemäß einer ersten lokalen Uhr, die mit der ersten Messeinheit (108, 300, 802) assoziiert ist, zeitgestempelt werden, der eine oder die mehreren Abtastwerte der Messdaten von der zweiten Messeinheit (110, 300, 802) gemäß einer zweiten lokalen Uhr, die mit der zweiten Messeinheit (110, 300, 802) assoziiert ist, zeitgestempelt werden, und eine erste Frequenz der ersten lokalen Uhr von einer zweiten Frequenz der zweiten lokalen Uhr unterschiedlich ist; und

Charakterisieren eines Zustands des Fahrzeugs (102) mindestens teilweise basierend auf den assoziierten Abtastwerten der Messdaten.

2. Verfahren nach Anspruch 1, wobei:

die erste Messeinheit (108, 300, 802) mit einer oder mehreren Abtastanordnungen (120, 122), die an Bord des Fahrzeugs (102) montiert sind, gekoppelt ist, um erste Messdatenabtastwerte, die einem ersten mechanischen Bauteil (104, 106) des Fahrzeugs (102) entsprechen, bereitzustellen;

die zweite Messeinheit (110, 300, 802) mit einer oder mehreren Abtastanordnungen (124, 126), die an Bord des Fahrzeugs (102) montiert sind, gekoppelt ist, um zweite Messdatenabtastwerte, die einem zweiten mechanischen Bauteil (114, 116) des Fahrzeugs (102) entsprechen, bereitzustellen; und

wobei das Assoziieren des einen oder der mehreren Abtastwerte der Messdaten von der ersten Messeinheit (108, 300, 802) mit dem einen oder den mehreren Abtastwerten der Messdaten von der zweiten Messeinheit (110, 300, 802) das Identifizieren einer synchronisierten Teilmenge der ersten Messdatenabtastwerte und der zweiten Messdatenabtastwerte in einer Referenzzeitdomäne umfasst; und

das Charakterisieren des Zustands eine Gesundheits- und Benutzungsüberwachungssystem- (HUMS, Health and Use Monitoring System)-Anwendung auf dem Client-Gerät (130) umfasst, die den Zustand basierend auf der synchronisierten Teilmenge der ersten Messdatenabtastwerte und der zweiten Messdatenabtastwerte bestimmt.

3. Verfahren nach Anspruch 1, wobei:

die erste Messeinheit (108, 300, 802) mit einer oder mehreren Abtastanordnungen (120, 122), die an Bord des Fahrzeugs (102) montiert sind, gekoppelt ist, um erste Messdatenabtastwerte, die einem ersten mechanischen Bauteil (104, 106) des Fahrzeugs (102) entsprechen, bereitzustellen;

die ersten Messdatenabtastwerte gemäß einer ersten Zeitdomäne, die mit der ersten Messeinheit (108, 300, 802) assoziiert ist, zeitgestempelt werden;

die zweite Messeinheit (110, 300, 802) mit einer oder mehreren Abtastanordnungen (124, 126), die an Bord des Fahrzeugs (102) montiert sind, gekoppelt ist, um zweite Messdatenabtastwerte, die einem zweiten mechanischen Bauteil (114, 116) des Fahrzeugs (102) entsprechen, bereitzustellen;

die zweiten Messdatenabtastwerte gemäß einer zweiten Zeitdomäne, die mit der zweiten Messeinheit (110, 300, 802) assoziiert ist, zeitgestempelt werden; und

das Assoziieren des einen oder der mehreren Abtastwerte der Messdaten von der ersten Messeinheit (108, 300, 802) mit dem einen oder den mehreren Abtastwerten der Messdaten von der zweiten Messeinheit (110, 300, 802) umfasst:

Übersetzen mindestens eines der ersten Messdatenabtastwerte und der zweiten Messdatenabtastwerte in eine Referenzzeitdomäne; und

Assoziieren eines oder mehrerer der ersten Messdatenabtastwerte mit einem oder mehreren der zweiten Messdatenabtastwerte in der Referenzzeitdomäne.

4. Verfahren nach Anspruch 3, wobei das Assoziieren des einen oder der mehreren der ersten Messdatenabtastwerte mit dem einen oder den mehreren der zweiten Messdatenabtastwerte in der Referenzzeitdomäne das Identifizieren des einen oder der mehreren der ersten Messdatenabtastwerte, der eine Zeitstempeldifferenz in Bezug auf den einen oder die mehreren der zweiten Messdatenabtastwerte in der Referenzzeitdomäne aufweist, die kleiner als ein Synchronisationsschwellenwert ist, umfasst.

5. Verfahren nach Anspruch 1, wobei:

das Senden der Vielzahl von Messsynchronisationsmeldungen umfasst:

Senden einer Messstartsynchronisationsmeldung, um das Messfenster zu initiieren; und
Senden einer Messstoppsynchronisationsmeldung, um das Messfenster zu beenden; und

wobei die Synchronisationszeitstempeldaten lokale Zeitstempel angeben, die mit einem Empfang der Messstartsynchronisationsmeldung und Empfang der Messstoppsynchronisationsmeldung von jeder der Vielzahl von Messeinheiten assoziiert sind.

6. Verfahren nach Anspruch 5, wobei Assoziieren des einen oder der mehreren Abtastwerte der Messdaten von der ersten Messeinheit (108, 300, 802) mit dem einen oder den mehreren Abtastwerten der Messdaten von der zweiten Messeinheit (110, 300, 802) umfasst:

Bestimmen der ersten Frequenz, die mit der ersten Messeinheit (108, 300, 802) assoziiert ist, basierend auf den lokalen Zeitstempeln, die mit einem Empfang der Messstartsynchronisationsmeldung und Empfang der Messstoppsynchronisationsmeldung durch die erste Messeinheit (108, 300, 802) assoziiert sind;
Bestimmen der zweiten Frequenz, die mit der zweiten Messeinheit (110, 300, 802) assoziiert ist, basierend auf den lokalen Zeitstempeln, die mit einem Empfang der Messstartsynchronisationsmeldung und Empfang der Messstoppsynchronisationsmeldung durch die zweite Messeinheit (110, 300, 802) assoziiert sind; und
Ausrichten des einen oder der mehreren Abtastwerte der Messdaten von der ersten Messeinheit (108, 300, 802) mit dem einen oder den mehreren Abtastwerten der Messdaten von der zweiten Messeinheit (110, 300, 802) mindestens teilweise basierend auf einer Beziehung zwischen der ersten Frequenz und der zweiten Frequenz.

7. Verfahren nach Anspruch 6, wobei das Ausrichten des einen oder der mehreren Abtastwerte der Messdaten von der ersten Messeinheit (108, 300, 802) mit dem einen oder den mehreren Abtastwerten der Messdaten von der zweiten Messeinheit (110, 300, 802) das Übersetzen mindestens eines des einen oder der mehreren Abtastwerte der Messdaten von der ersten Messeinheit (108, 300, 802) und des einen oder der mehreren Abtastwerte der Messdaten von der zweiten Messeinheit (110, 300, 802) mit einer gemeinsamen Referenzzeitdomäne mindestens teilweise basierend auf der Beziehung zwischen der ersten Frequenz und der zweiten Frequenz umfasst.

8. Verfahren nach Anspruch 1, das ferner umfasst, dass das Client-Gerät (130) aktuelle Statusinformationen für das Fahrzeug (102) von einem Bordsystem erhält, wobei das Client-Gerät (130) automatisch das Senden der Vielzahl von Messsynchronisationsmeldungen mindestens teilweise basierend auf den aktuellen Statusinformationen initiiert.

9. Verfahren nach Anspruch 1, wobei das Fahrzeug (102) einen Drehflügler (102) mit einer Rotoranordnung (106) umfasst, wobei das Charakterisieren des Zustands des Fahrzeugs (102) das Durchführen einer Spur- und Aus-

**EP 3 473 994 B1**

gleichsanalyse des Rotors (106) unter Verwenden der assoziierten Abtastwerte der Messdaten umfasst.

10. Überwachungssystem (100) für ein Fahrzeug (102), wobei das Überwachungssystem (100) umfasst:

ein erstes Messmodul an Bord des Fahrzeugs (102), um erste Messdatenabtastwerte, die einem ersten mechanischen Bauteil (104, 106) des Fahrzeugs (102) entsprechen, während eines Messfensters bereitzustellen;
ein zweites Messmodul an Bord des Fahrzeugs (102), um zweite Messdatenabtastwerte, die einem zweiten mechanischen Bauteil (114, 116) des Fahrzeugs (102) entsprechen, während des Messfensters bereitzustellen; und
ein elektronisches Gerät, das über ein drahtloses Netzwerk (138) kommunikationsfähig mit dem zweiten Messmodul und dem zweiten Messmodul verbunden ist, um:

eine Vielzahl von Messsynchronisationsmeldungen, die dem Messfenster entsprechen, zu senden;
erste Synchronisationszeitstempeldaten, die dem Empfang der Vielzahl von Messsynchronisationsmeldungen durch das erste Messmodul entsprechen, zu empfangen;
zweite Synchronisationszeitstempeldaten, die dem Empfang der Vielzahl von Messsynchronisationsmeldungen durch das zweite Messmodul entsprechen, zu empfangen;
die ersten Messdatenabtastwerte von dem ersten Messmodul zu empfangen;
die zweiten Messdatenabtastwerte von dem zweiten Messmodul zu empfangen;
den einem oder die mehreren der ersten Messdatenabtastwerte mit einem oder mehreren der zweiten Messdatenabtastwerte mindestens teilweise basierend auf den ersten Synchronisationszeitstempeldaten und den zweiten Synchronisationszeitstempeldaten zu assoziieren; und
einen Zustand des Fahrzeugs (102) mindestens teilweise basierend auf den assoziierten Messdatenabtastwerten zu charakterisieren, **dadurch gekennzeichnet dass**:

die ersten Messdatenabtastwerte gemäß einer ersten lokalen Uhr, die mit dem ersten Messmodul assoziiert ist, zeitgestempelt werden;
die zweiten Messdatenabtastwerte gemäß einer zweiten lokalen Uhr, die mit dem zweiten Messmodul assoziiert ist, zeitgestempelt werden; und
eine erste Frequenz der ersten lokalen Uhr von einer zweiten Frequenz der zweiten lokalen Uhr unterschiedlich ist.

11. Überwachungssystem (100) nach Anspruch 10, wobei jeder des einen oder der mehreren der ersten Messdatenabtastwerte innerhalb einer Synchronisationsschwellenzeitdifferenz eines assoziierten des einen oder der mehreren der zweiten Messdatenabtastwerte liegt.

12. Überwachungssystem (100) nach Anspruch 10, wobei der eine oder die mehreren der ersten Messdatenabtastwerte mit dem einen oder den mehreren der zweiten Messdatenabtastwerte in einer Referenzzeitdomäne mindestens teilweise basierend auf den ersten Synchronisationszeitstempeldaten und den zweiten Synchronisationszeitstempeldaten assoziiert sind.

13. Überwachungssystem (100) nach Anspruch 10, wobei:
die erste lokale Uhr und die zweite lokale Uhr asynchron sind; und
der eine oder die mehreren der ersten Messdatenabtastwerte mit dem einen oder den mehreren der zweiten Messdatenabtastwerte in einer Referenzzeitdomäne mindestens teilweise basierend auf den ersten Synchronisationszeitstempeldaten und den zweiten Synchronisationszeitstempeldaten assoziiert sind.

14. Überwachungssystem (100) nach Anspruch 10, wobei:

die ersten Synchronisationszeitstempeldaten eine erste Vielzahl von Zeitstempeln gemäß der ersten lokalen Uhr entsprechend dem Empfang der Vielzahl von Messsynchronisationsmeldungen durch das erste Messmodul umfassen;
die zweiten Synchronisationszeitstempeldaten eine zweite Vielzahl von Zeitstempeln gemäß der zweiten lokalen Uhr entsprechend dem Empfang der Vielzahl von Messsynchronisationsmeldungen durch das zweite Messmodul umfassen;
das elektronische Gerät konfiguriert ist, um die erste Frequenz der ersten lokalen Uhr mindestens teilweise basierend auf der ersten Vielzahl von Zeitstempeln zu bestimmen, die zweite Frequenz der zweiten lokalen Uhr mindestens teilweise basierend auf der zweiten Vielzahl von Zeitstempeln zu bestimmen, mindestens einen der ersten Messdatenabtastwerte und der zweiten Messdatenabtastwerte in eine Referenzzeitdomäne mindestens teilweise basierend auf einer Beziehung zwischen der ersten Frequenz und der zweiten Frequenz zu übersetzen, und den einen oder die mehreren der ersten Messdatenabtastwerte mit dem einen oder den mehreren der zweiten Messdatenabtastwerten basierend auf einer Differenz in der Referenzzeitdomäne zu assoziieren, die kleiner als ein Synchronisationsschwellenwert ist;

die Vielzahl von Messsynchronisationsmeldungen eine Messstartsynchronisationsmeldung umfasst, die das Messfenster initiiert, und eine Messstoppsynchronisationsmeldung, die das Messfenster beendet;

die erste Vielzahl von Zeitstempeln einen ersten Zeitstempelwert, der dem Empfang der Messstartsynchronisationsmeldung entspricht, umfasst, und einen zweiten Zeitstempelwert, der dem Empfang der Messstoppsynchronisationsmeldung entspricht;

die zweite Vielzahl von Zeitstempeln einen dritten Zeitstempelwert, der dem Empfang der Messstartsynchronisationsmeldung entspricht, umfasst, und einen vierten Zeitstempelwert, der dem Empfang der Messstoppsynchronisationsmeldung entspricht;

das elektronische Gerät konfiguriert ist, um die erste Frequenz basierend auf einer ersten Differenz zwischen dem zweiten Zeitstempelwert und dem ersten Zeitstempelwert zu bestimmen; und

das elektronische Gerät konfiguriert ist, um die zweite Frequenz basierend auf einer zweiten Differenz zwischen dem vierten Zeitstempelwert und dem dritten Zeitstempelwert zu bestimmen.

## Revendications

1. Procédé de surveillance de l'état d'un véhicule (102), le procédé comprenant :

la diffusion, par un dispositif client (130) sur un réseau sans fil (138), d'une pluralité de messages de synchronisation de mesure correspondant à une fenêtre de mesure vers une pluralité d'unités de mesure à bord du véhicule (102) ;

l'obtention, au niveau du dispositif client (130), des données d'horodatage de synchronisation correspondant à la pluralité de messages de synchronisation de mesure provenant de chacune des unités de la pluralité d'unités de mesure ;

l'obtention, au niveau du dispositif client (130), de données de mesure obtenues pendant la fenêtre de mesure à partir de chacune des unités de la pluralité d'unités de mesure ;

l'association d'un ou de plusieurs échantillons des données de mesure provenant d'une première unité de mesure (108, 300, 802) de la pluralité d'unités de mesure à un ou à plusieurs échantillons des données de mesure d'une seconde unité de mesure (110, 300, 802) provenant de la pluralité d'unités de mesure, en fonction des données d'horodatage de synchronisation, donnant des échantillons associés des données de mesure, le procédé **se caractérisant en ce que** lesdits échantillons des données de mesure de la première unité de mesure (108, 300, 802) sont horodatés selon une première horloge locale associée à la première unité de mesure (108, 300, 802), **en ce que** lesdits échantillons des données de mesure de la seconde unité de mesure (110, 300, 802) sont horodatés selon une seconde horloge locale, associée à la seconde unité de mesure (110, 300, 802) et **en ce qu'**une première fréquence de la première horloge locale diffère d'une seconde fréquence de la seconde horloge locale ; et

la caractérisation d'un état du véhicule (102) en fonction, au moins en partie, des échantillons associés des données de mesure.

2. Procédé selon la revendication 1, dans lequel :

la première unité de mesure (108, 300, 802) est couplée à un ou à plusieurs agencements de détection (120, 122) montés à bord du véhicule (102) pour fournir des premiers échantillons de données de mesure correspondant à un premier composant mécanique (104, 106) du véhicule (102) ;

la seconde unité de mesure (110, 300, 802) est couplée à un ou à plusieurs agencements de détection (124, 126), montés à bord du véhicule (102) pour fournir des seconds échantillons de données de mesure correspondant à un second composant mécanique (114, 116) du véhicule (102) ; et

l'association du ou desdits échantillons des données de mesure de la première unité de mesure (108, 300, 802) auxdits échantillons des données de mesure de la seconde unité de mesure (110, 300, 802) comprend l'identification d'un sous-ensemble synchronisé des premiers échantillons de données de mesure et des seconds échantillons de données de mesure dans un domaine d'horloge de référence ; et

la caractérisation de l'état comprend une application de systèmes de surveillance de l'état et de l'utilisation (HUMS) au niveau du dispositif client (130) déterminant l'état, en fonction du sous-ensemble synchronisé des premiers échantillons de données de mesure et des seconds échantillons de données de mesure.

3. Procédé selon la revendication 1, dans lequel :

la première unité de mesure (108, 300, 802) est couplée à un ou à plusieurs agencements de détection (120, 122) montés à bord du véhicule (102) pour fournir des premiers échantillons de données de mesure correspondant à un premier composant mécanique (104, 106) du véhicule (102) ;
les premiers échantillons de données de mesure sont horodatés selon un premier domaine d'horloge associé à la première unité de mesure (108, 300, 802) ;
la seconde unité de mesure (110, 300, 802) est couplée à un ou à plusieurs agencements de détection (124, 126) montés à bord du véhicule (102) pour fournir des seconds échantillons de données de mesure correspondant à un second composant mécanique (114, 116) du véhicule (102) ;
les seconds échantillons de données de mesure sont horodatés selon un second domaine d'horloge associé à la seconde unité de mesure (110, 300, 802) ; et
l'association desdits échantillons des données de mesure de la première unité de mesure (108, 300, 802) auxdits échantillons des données de mesure de la seconde unité de mesure (110, 300, 802) comprend :

la traduction d'au moins un des premiers échantillons de données de mesure et/ou des seconds échantillons de données de mesure par un domaine d'horloge de référence ; et
l'association d'un ou de plusieurs des premiers échantillons de données de mesure à un ou à plusieurs des seconds échantillons de données de mesure dans le domaine d'horloge de référence.

4. Procédé selon la revendication 3, dans lequel l'association du ou desdits premiers échantillons de données de mesure auxdits seconds échantillons de données de mesure dans le domaine d'horloge de référence comprend l'identification du ou desdits premiers échantillons de données de mesure dont la différence d'horodatage, par rapport auxdits seconds échantillons de données de mesure dans le domaine d'horloge de référence, est inférieure à un seuil de synchronisation.

5. Procédé selon la revendication 1, dans lequel :

la diffusion de la pluralité de messages de synchronisation de mesure comprend :

la diffusion d'un message de synchronisation de début de mesure, pour lancer la fenêtre de mesure ; et
la diffusion d'un message de synchronisation d'arrêt de mesure, pour terminer la fenêtre de mesure ; et

les données d'horodatage de synchronisation indiquent des horodatages locaux associés à la réception du message de synchronisation de début de mesure et à la réception du message de synchronisation d'arrêt de mesure provenant de chacune des unités de la pluralité d'unités de mesure.

6. Procédé selon la revendication 5, dans lequel l'association du ou desdits échantillons des données de mesure de la première unité de mesure (108, 300, 802) auxdits échantillons des données de mesure de la seconde unité de mesure (110, 300, 802) comprend :

la détermination de la première fréquence associée à la première unité de mesure (108, 300, 802) en fonction des horodatages locaux associés à la réception du message de synchronisation de début de mesure et à la réception du message de synchronisation d'arrêt de mesure par la première unité de mesure (108, 300, 802) ;
la détermination de la seconde fréquence associée à la seconde unité de mesure (110, 300, 802) en fonction des horodatages locaux associés à la réception du message de synchronisation de début de mesure et à la réception du message de synchronisation d'arrêt de mesure par la seconde unité de mesure (110, 300, 802) ; et
l'alignement du ou desdits échantillons des données de mesure de la première unité de mesure (108, 300, 802) avec lesdits échantillons des données de mesure de la seconde unité de mesure (110, 300, 802) en fonction, au moins en partie, d'une relation entre la première fréquence et la seconde fréquence.

7. Procédé selon la revendication 6, dans lequel l'alignement d'un ou de plusieurs échantillons des données de mesure de la première unité de mesure (108, 300, 802) avec lesdits échantillons des données de mesure de la seconde unité de mesure (110, 300, 802) comprend la traduction du ou desdits échantillons des données de mesure de la première unité de mesure (108, 300, 802) et/ou du ou desdits échantillons des données de mesure de la seconde unité de mesure (110, 300, 802) par un domaine commun d'horloge de référence, en fonction, au moins en partie, de la relation entre la première fréquence et la seconde fréquence.

8.  Procédé selon la revendication 1, comprenant en outre l'obtention, par le dispositif client (130), d'informations d'état actuelles pour le véhicule (102) à partir d'un système embarqué, dans lequel le dispositif client (130) lance automatiquement la diffusion de la pluralité de messages de synchronisation de mesure en fonction, au moins en partie, des informations d'état actuelles.

9.  Procédé selon la revendication 1, dans lequel le véhicule (102) comprend un giravion (102) comprenant un ensemble rotor (106), dans lequel la caractérisation de l'état du véhicule (102) comprend l'exécution d'une analyse de piste et d'équilibre du rotor (106) à l'aide des échantillons associés des données de mesure.

10. Système de surveillance (100) destiné à un véhicule (102), le système de surveillance (100) comprenant :

    un premier module de mesure à bord du véhicule (102) permettant de fournir des premiers échantillons de données de mesure correspondant à un premier composant mécanique (104, 106) du véhicule (102) pendant une fenêtre de mesure ;
    un second module de mesure à bord du véhicule (102), permettant de fournir des seconds échantillons de données de mesure correspondant à un second composant mécanique (114, 116) du véhicule (102) pendant la fenêtre de mesure ; et
    un dispositif électronique, couplé en communication au premier module de mesure et au second module de mesure sur un réseau sans fil (138) :

        pour diffuser une pluralité de messages de synchronisation de mesure correspondant à la fenêtre de mesure ;
        pour recevoir des premières données d'horodatage de synchronisation correspondant à la réception de la pluralité de messages de synchronisation de mesure par le premier module de mesure ;
        pour recevoir des secondes données d'horodatage de synchronisation correspondant à la réception de la pluralité de messages de synchronisation de mesure par le second module de mesure ;
        pour recevoir les premiers échantillons de données de mesure du premier module de mesure ;
        pour recevoir les seconds échantillons de données de mesure du second module de mesure ;
        pour associer un ou plusieurs des premiers échantillons de données de mesure à un ou à plusieurs des seconds échantillons de données de mesure en fonction, au moins en partie, des premières données d'horodatage de synchronisation et des secondes données d'horodatage de synchronisation ; et
        pour caractériser un état du véhicule (102) en fonction, au moins en partie, des échantillons associés de données de mesure, le système **se caractérisant en ce que** :

            les premiers échantillons de données de mesure sont horodatés selon une première horloge locale, associée au premier module de mesure ;
            les seconds échantillons de données de mesure sont horodatés selon une seconde horloge locale, associée au second module de mesure ; et
            une première fréquence de la première horloge locale diffère d'une seconde fréquence de la seconde horloge locale.

11. Système de surveillance (100) selon la revendication 10, dans lequel chacun du ou desdits premiers échantillons de données de mesure se trouve dans une différence de temps de seuil de synchronisation d'un échantillon associé du ou desdits seconds échantillons de données de mesure.

12. Système de surveillance (100) selon la revendication 10, dans lequel lesdits premiers échantillons de données de mesure sont associés auxdits seconds échantillons de données de mesure dans un domaine d'horloge de référence en fonction, au moins en partie, des premières données d'horodatage de synchronisation et des secondes données d'horodatage de synchronisation.

13. Système de surveillance (100) selon la revendication 10, dans lequel :
    la première horloge locale et la seconde horloge locale sont asynchrones ; et
    le ou lesdits premiers échantillons de données de mesure sont associés auxdits seconds échantillons de données de mesure dans un domaine d'horloge de référence en fonction, au moins en partie, des premières données d'horodatage de synchronisation et des secondes données d'horodatage de synchronisation.

**14.** Système de surveillance (100) selon la revendication 10, dans lequel :

les premières données d'horodatage de synchronisation comprennent une première pluralité d'horodatages selon la première horloge locale correspondant à la réception de la pluralité de messages de synchronisation de mesure par le premier module de mesure ;

les secondes données d'horodatage de synchronisation comprennent une seconde pluralité d'horodatages selon la seconde horloge locale correspondant à la réception de la pluralité de messages de synchronisation de mesure par le second module de mesure ;

le dispositif électronique est configuré pour déterminer la première fréquence de la première horloge locale en fonction, au moins en partie, de la première pluralité d'horodatages, pour déterminer la seconde fréquence de la seconde horloge locale en fonction, au moins en partie, de la seconde pluralité d'horodatages, pour traduire les premiers échantillons de données de mesure et/ou les seconds échantillons de données de mesure par un domaine d'horloge de référence en fonction, au moins en partie, d'une relation entre la première fréquence et la seconde fréquence, et pour associer le ou lesdits premiers échantillons de données de mesure auxdits seconds échantillons de données de mesure en fonction du fait qu'une différence dans le domaine d'horloge de référence est inférieure à un seuil de synchronisation ;

la pluralité de messages de synchronisation de mesure comprend un message de synchronisation de début de mesure démarrant la fenêtre de mesure, et un message de synchronisation d'arrêt de mesure terminant la fenêtre de mesure ;

la première pluralité d'horodatages comprend une première valeur d'horodatage correspondant à la réception du message de synchronisation de début de mesure, et une deuxième valeur d'horodatage, correspondant à la réception du message de synchronisation d'arrêt de mesure ;

la seconde pluralité d'horodatages comprend une troisième valeur d'horodatage, correspondant à la réception du message de synchronisation de début de mesure, et une quatrième valeur d'horodatage, correspondant à la réception du message de synchronisation d'arrêt de mesure ;

le dispositif électronique est configuré pour déterminer la première fréquence en fonction d'une première différence entre la deuxième valeur d'horodatage et la première valeur d'horodatage ; et

le dispositif électronique est configuré pour déterminer la seconde fréquence en fonction d'une seconde différence entre la quatrième valeur d'horodatage et la troisième valeur d'horodatage.

FIG. 1

EP 3 473 994 B1

200

MOBILE DEVICE

DISPLAY
DEVICE ┌210

208

USER INPUT
DEVICE

202

CONTROL
MODULE

206

COMMUNICATIONS
INTERFACE

DATA
STORAGE ┌204

FIG. 2

300

SENSOR MANAGEMENT MODULE

308

SENSOR
INTERFACE(S)

302

CONTROL
MODULE

306

COMMUNICATIONS
INTERFACE

DATA
STORAGE ┌304

FIG. 3

DISTRIBUTED MONITORING PROCESS — 400

↓

OBTAIN CONFIGURATION INFORMATION
FOR MONITORING ROTORCRAFT — 402

↓

CONFIGURE WIRELESS MEASUREMENT UNITS
BASED ON MONITORING CONFIGURATION INFORMATION — 404

↓

OBTAIN MEASUREMENT DATA IN ACCORDANCE WITH
MONITORING CONFIGURATION INFORMATION — 406

↓

CHARACTERIZE STATUS OF MECHANICAL
COMPONENTS BASED ON MEASUREMENT DATA — 408

↓

PROVIDE GRAPHICAL REPRESENTATION OF STATUS — 410

↓

UPLOAD MEASUREMENT AND/OR
STATUS DATA TO REMOTE DEVICE — 412

↓

END

FIG. 4

MEASUREMENT DATA SYNCHRONIZATION PROCESS ⌐500

BROADCAST MEASUREMENT START SYNCHRONIZATION MESSAGE(S) PRIOR TO MEASUREMENT WINDOW ⌐502

RECEIVE MEASUREMENT START SYNCHRONIZATION TIMESTAMP DATA FROM WMUS ⌐504

BROADCAST MEASUREMENT STOP SYNCHRONIZATION MESSAGE(S) ⌐506

RECEIVE MEASUREMENT STOP SYNCHRONIZATION TIMESTAMP DATA FROM WMUS ⌐508

OBTAIN MEASUREMENT DATA SAMPLES CORRESPONDING TO MEASUREMENT WINDOW FROM WMUS ⌐510

ASSOCIATE MEASUREMENT DATA SAMPLES FROM DIFFERENT WMUS USING SYNCHRONIZATION TIMESTAMP DATA CORRESPONDING TO MEASUREMENT WINDOW ⌐512

EXIT

FIG. 5

FIG. 6

FIG. 7

EP 3 473 994 B1

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017019678 A1